# EUROPEAN PATENT SPECIFICATION

(11) **EP 4 072 210 B1**
(45) Date of publication and mention of the grant of the patent: **12.02.2025**
(21) Application number: 22167007.8
(22) Date of filing: 06.04.2022
(51) Int. Cl.: H04W 72/02, H04W 72/044

(54) **METHOD AND DEVICE FOR PERFORMING SIDELINK COMMUNICATION USING COORDINATION INFORMATION**
VERFAHREN UND VORRICHTUNG ZUR DURCHFÜHRUNG VON SIDELINK-KOMMUNIKATION UNTER VERWENDUNG VON KOORDINATIONSINFORMATIONEN
PROCÉDÉ ET DISPOSITIF PERMETTANT D'EFFECTUER UNE COMMUNICATION DE LIAISON LATÉRALE À L'AIDE D'INFORMATIONS DE COORDINATION

(30) Priority: 06.04.2021 KR 20210044780; 29.03.2022 KR 20220038481
(43) Date of publication of application: 12.10.2022
(73) Proprietor: KT Corporation, Seongnam-si, Gyeonggi-do 13606 (KR)
(72) Inventor: PARK, Kyujin, 13606 Seongnam-si (KR)
(74) Representative: Brevalex

(56) References cited:
- WO-A1-2020/091494
- US-A1- 2021 400 639
- MODERATOR (LG ELECTRONICS): "Feature lead summary for AI 8.11.2.2 Feasibility and benefits for mode 2 enhancements", vol. RAN WG1, no. e-Meeting; 20201026 - 20201113, 19 November 2020 (2020-11-19), XP051955958, Retrieved from the Internet <URL:https://ftp.3gpp.org/tsg_ran/WG1_RL1/TSGR1_103-e/Docs/R1-2009788.zip R1-2009788 FL summary for AI 8.11.2.2.docx> [retrieved on 20201119]
- CONVIDA WIRELESS: "On Resource Allocation Mode 2 Enhancement for NR Sidelink", vol. RAN WG2, no. electronic; 20201102 - 20201113, 23 October 2020 (2020-10-23), XP051942830, Retrieved from the Internet <URL:https://ftp.3gpp.org/tsg_ran/WG2_RL2/TSGR2_112-e/Docs/R2-2010144.zip R2-2010144_On Resource Allocation Mode 2 Enhancement for NR Sidelink.docx> [retrieved on 20201023]

## Description

### BACKGROUND

### Field

The present disclosure relates to a method and device for performing sidelink communication using coordination information in a next-generation radio access network (hereinafter, "new radio (NR)").

### Description of Related Art

Recently, the 3rd generation partnership project (3GPP) has approved the "Study on New Radio Access Technology", which is a study item for research on next-generation/5G radio access technology (hereinafter, referred to as "new radio" or "NR"). On the basis of the Study on New Radio Access Technology, Radio Access Network Working Group 1 (RAN WG1) has been discussing frame structures, channel coding and modulation, waveforms, multiple access methods, and the like for the new radio (NR). It is required to design the NR not only to provide an improved data transmission rate as compared with the long term evolution (LTE)/LTE-Advanced, but also to meet various requirements in detailed and specific usage scenarios.

An enhanced mobile broadband (eMBB), massive machine-type communication (mMTC), and ultra-reliable and low latency communication (URLLC) are proposed as representative usage scenarios of the NR. In order to meet the requirements of the individual scenarios, it is required to design the NR to have flexible frame structures, compared with the LTE/LTE-Advanced.

Because the requirements for data rates, latency, reliability, coverage, etc. are different from each other, there is a need for a method for efficiently multiplexing a radio resource unit based on different numerologies from other (e.g., subcarrier spacing, subframe, Transmission Time Interval (TTI), etc.) as a method for efficiently satisfying each usage scenario requirement through a frequency band constituting a NR system.

As an aspect thereof, it is required to develop design for efficiently using a radio resource for sidelink communication without conflict when multiple UEs perform sidelink communication, in particular in a communication mode where the base station schedules no radio resource, in NR sidelink communication using a sidelink which is a radio link between UEs to provide a V2X service in NR.

A patent document WO2020091494A1 discloses a method by which a first device performs sidelink transmission and a device for supporting same are provided. The method can comprise the steps of: receiving, from a second device, assistance information related to one or more resources for sidelink communication; selecting a transmission resource from among the one or more resources on the basis of the assistance information; and performing sidelink transmission on the transmission resource.

A non-patent literature "On Resource Allocation Mode 2 Enhancement for NR Sidelink" of Convida Wireless on 3GPP TSG-RAN WG2 Metting #122 electronic (Online, November 2nd-13th, 2020) discusses resource allocation enhancements for NR sidelink, including 1) specifying resource allocation to reduce power consumption of the UEs [RAN1, RAN2], wherein baseline is to introduce the principle of Rel-14 LTE sidelink random resource selection and partial sensing to Rel-16 NR sidelink resource allocation mode 2, and 2) studying the feasibility and benefit of the enhancement(s) in mode 2 for enhanced reliability and reduced latency in consideration of both PRR and PIR defined in TR37.885 (by RAN#91), and specifying the identified solution if deemed feasible and beneficial [RAN1, RAN2].

### BRIEF SUMMARY

The present disclosure introduces a method and device for performing sidelink communication using coordination information in NR.

The invention is set out in the appended set of claims.

### DESCRIPTION OF DRAWINGS

The above and other aspects, features, and advantages of the present disclosure will be more apparent from the following detailed description taken in conjunction with the accompanying drawings, in which:
FIG. 1 is a view schematically illustrating an NR wireless communication system in accordance with embodiments of the present disclosure;
FIG. 2 is a view schematically illustrating a frame structure in an NR system in accordance with embodiments of the present disclosure.
FIG. 3 is a view for explaining resource grids supported by a radio access technology in accordance with embodiments of the present disclosure;
FIG. 4 is a view for explaining bandwidth parts supported by a radio access technology in accordance with embodiments of the present disclosure;
FIG. 5 is a view illustrating an example of a synchronization signal block in a radio access technology in accordance with embodiments of the present disclosure;
FIG. 6 is a signal diagram for explaining a random access procedure in a radio access technology in accordance with embodiments of the present disclosure;
FIG. 7 is a view for explaining CORESET;
FIG. 8 is a view for explaining various scenarios for V2X communication;
FIG. 9A is a view illustrating a first UE (UE1) and a second UE (UE2) performing sidelink communication, and FIG. 9B is a view illustrating an example of resource pools for UEs;
FIG. 10 is a view for explaining a method of bundling and transmitting HARQ feedback information in the V2X;
FIGS. 11A and 11B are illustrates a type of a V2X transmission resource pool;
FIG. 12 is a view illustrating an example of symbol level alignment among different subcarrier spacings (SCSs) in accordance with embodiments of the present disclosure;
FIG. 13 is a view schematically illustrating a bandwidth part to which embodiments of the present disclosure may be applied;
FIG. 14 is a flowchart illustrating a procedure for performing sidelink communication using coordination information by a transmission UE according to an embodiment;
FIG. 15 is a flowchart illustrating a procedure for performing sidelink communication using coordination information by a reception UE according to an embodiment;
FIG. 16 is a view illustrating an operation for transmitting/receiving coordination information in sidelink communication according to an embodiment;
FIG. 17 is a view illustrating a configuration of a reference sidelink resource according to an embodiment;
FIG. 18 is a block diagram illustrating a transmission UE according to an embodiment; and
FIG. 19 is a block diagram illustrating a reception UE according to an embodiment.

### DETAILED DESCRIPTION

Hereinafter, some embodiments of the present disclosure will be described in detail with reference to the accompanying illustrative drawings. In the drawings, like reference numerals are used to denote like elements throughout the drawings, even if they are shown on different drawings. Further, in the following description of the present disclosure, a detailed description of known functions and configurations incorporated herein will be omitted when it may make the subject matter of the present disclosure rather unclear. When the expression "include", "have", "comprise", or the like as mentioned herein is used, a other part may be added unless the expression "only" is used. When an element is expressed in the singular, the element may cover the plural form unless a special mention is explicitly made of the element.

In addition, terms, such as first, second, A, B, (A), (B) or the like may be used herein when describing components of the present disclosure. Each of these terminologies is not used to define an essence, order or sequence of a corresponding component but used merely to distinguish the corresponding component from other component(s).

In describing the positional relationship between components, if two or more components are described as being "connected", "combined", or "coupled" to each other, it should be understood that two or more components may be directly "connected", "combined", or "coupled" to each other, and that two or more components may be "connected", "combined", or "coupled" to each other with another component "interposed" therebetween. In this case, another component may be included in at least one of the two or more components that are "connected", "combined", or "coupled" to each other.

In the description of a sequence of operating methods or manufacturing methods, for example, the expressions using "after", "subsequent to", "next", "before", and the like may also encompass the case in which operations or processes are performed discontinuously unless "immediately" or "directly" is used in the expression.

Numerical values for components or information corresponding thereto (e.g., levels or the like), which are mentioned herein, may be interpreted as including an error range caused by various factors (e.g., process factors, internal or external impacts, noise, etc.) even if an explicit description thereof is not provided.

The wireless communication system in the present specification refers to a system for providing various communication services, such as a voice service and a data service, using radio resources. The wireless communication system may include a user equipment (UE), a base station, a core network, and the like.

Embodiments disclosed below may be applied to a wireless communication system using various radio access technologies. For example, the embodiments may be applied to various radio access technologies such as code division multiple access (CDMA), frequency division multiple access (FDMA), time division multiple access (TDMA), orthogonal frequency division multiple access (OFDMA), single-carrier frequency division multiple access (SC-FDMA), non-orthogonal multiple access (NOMA), or the like. In addition, the radio access technology may refer to respective generation communication technologies established by various communication organizations, such as 3GPP, 3GPP2, WiFi, Bluetooth, IEEE, ITU, or the like, as well as a specific access technology. For example, CDMA may be implemented as a wireless technology such as universal terrestrial radio access (UTRA) or CDMA2000. TDMA may be implemented as a wireless technology such as global system for mobile communications (GSM)/general packet radio service (GPRS)/enhanced data rates for GSM evolution (EDGE). OFDMA may be implemented as a wireless technology such as IEEE (Institute of Electrical and Electronics Engineers) 802.11 (Wi-Fi), IEEE 802.16 (WiMAX), IEEE 802-20, evolved UTRA (E-UTRA), and the like. IEEE 802.16m is evolution of IEEE 802.16e, which provides backward compatibility with systems based on IEEE 802.16e. UTRA is a part of a universal mobile telecommunications system (UMTS). 3GPP (3rd-generation partnership project) LTE (long-term evolution) is a part of E-UMTS (evolved UMTS) using evolved-UMTS terrestrial radio access (E-UTRA), which adopts OFDMA in a downlink and SC-FDMA in an uplink. As described above, the embodiments may be applied to radio access technologies that have been launched or commercialized, and may be applied to radio access technologies that are being developed or will be developed in the future.

The UE used in the specification must be interpreted as a broad meaning that indicates a device including a wireless communication module that communicates with a base station in a wireless communication system. For example, the UE includes user equipment (UE) in WCDMA, LTE, NR, HSPA, IMT-2020 (5G or New Radio), and the like, a mobile station in GSM, a user terminal (UT), a subscriber station (SS), a wireless device, and the like. In addition, the UE may be a portable user device, such as a smart phone, or may be a vehicle, a device including a wireless communication module in the vehicle, and the like in a V2X communication system according to the usage type thereof. In the case of a machine-type communication (MTC) system, the UE may refer to an MTC terminal, an M2M terminal, or a URLLC terminal, which employs a communication module capable of performing machine-type communication.

A base station or a cell in the present specification refers to an end that communicates with a UE through a network and encompasses various coverage regions such as a Node-B, an evolved Node-B (eNB), a gNode-B, a low-power node (LPN), a sector, a site, various types of antennas, a base transceiver system (BTS), an access point, a point (e.g., a transmission point, a reception point, or a transmission/reception point), a relay node, a megacell, a macrocell, a microcell, a picocell, a femtocell, a remote radio head (RRH), a radio unit (RU), a small cell, and the like. In addition, the cell may be used as a meaning including a bandwidth part (BWP) in the frequency domain. For example, the serving cell may refer to an active BWP of a UE.

The various cells listed above are provided with a base station controlling one or more cells, and the base station may be interpreted as two meanings. The base station may be 1) a device for providing a megacell, a macrocell, a microcell, a picocell, a femtocell, or a small cell in connection with a wireless region, or the base station may be 2) a wireless region itself. In the above description 1), the base station may be the devices controlled by the same entity and providing predetermined wireless regions or all devices interacting with each other and cooperatively configuring a wireless region. For example, the base station may be a point, a transmission/reception point, a transmission point, a reception point, and the like according to the configuration method of the wireless region. In the above description 2), the base station may be the wireless region in which a user equipment (UE) may be enabled to transmit data to and receive data from the other UE or a neighboring base station.

In this specification, the cell may refer to coverage of a signal transmitted from a transmission/reception point, a component carrier having coverage of a signal transmitted from a transmission/reception point (or a transmission point), or a transmission/reception point itself.

An uplink (UL) refers to a scheme of transmitting data from a UE to a base station, and a downlink (DL) refers to a scheme of transmitting data from a base station to a UE. The downlink may mean communication or communication paths from multiple transmission/reception points to a UE, and the uplink may mean communication or communication paths from a UE to multiple transmission/reception points. In the downlink, a transmitter may be a part of the multiple transmission/reception points, and a receiver may be a part of the UE. In addition, in the uplink, the transmitter may be a part of the UE, and the receiver may be a part of the multiple transmission/reception points.

The uplink and downlink transmit and receive control information over a control channel, such as a physical downlink control channel (PDCCH) and a physical uplink control channel (PUCCH). The uplink and downlink transmit and receive data over a data channel such as a physical downlink shared channel (PDSCH) and a physical uplink shared channel (PUSCH). Hereinafter, the transmission and reception of a signal over a channel, such as PUCCH, PUSCH, PDCCH, PDSCH, or the like, may be expressed as "PUCCH, PUSCH, PDCCH, PDSCH, or the like is transmitted and received".

For the sake of clarity, the following description will focus on 3GPP LTE/LTE-A/NR (New Radio) communication systems, but technical features of the disclosure are not limited to the corresponding communication systems.

The 3GPP has been developing a 5G (5th-Generation) communication technology in order to meet the requirements of a next-generation radio access technology of ITU-R after studying 4G (4th-generation) communication technology. Specifically, 3GPP is developing, as a 5G communication technology, LTE-A pro by improving the LTE-Advanced technology so as to conform to the requirements of ITU-R and a new NR communication technology that is totally different from 4G communication technology. LTE-A pro and NR all refer to the 5G communication technology. Hereinafter, the 5G communication technology will be described on the basis of NR unless a specific communication technology is specified.

Various operating scenarios have been defined in NR in consideration of satellites, automobiles, new verticals, and the like in the typical 4G LTE scenarios so as to support an enhanced mobile broadband (eMBB) scenario in terms of services, a massive machine-type communication (mMTC) scenario in which UEs spread over a broad region at a high UE density, thereby requiring low data rates and asynchronous connections, and an ultra-reliability and low-latency (URLLC) scenario that requires high responsiveness and reliability and supports high-speed mobility.

In order to satisfy such scenarios, NR introduces a wireless communication system employing a new waveform and frame structure technology, a low-latency technology, a superhigh frequency band (mmWave) support technology, and a forward compatible provision technology. In particular, the NR system has various technological changes in terms of flexibility in order to provide forward compatibility. The primary technical features of NR will be described below with reference to the drawings.

### <Overview of NR System>

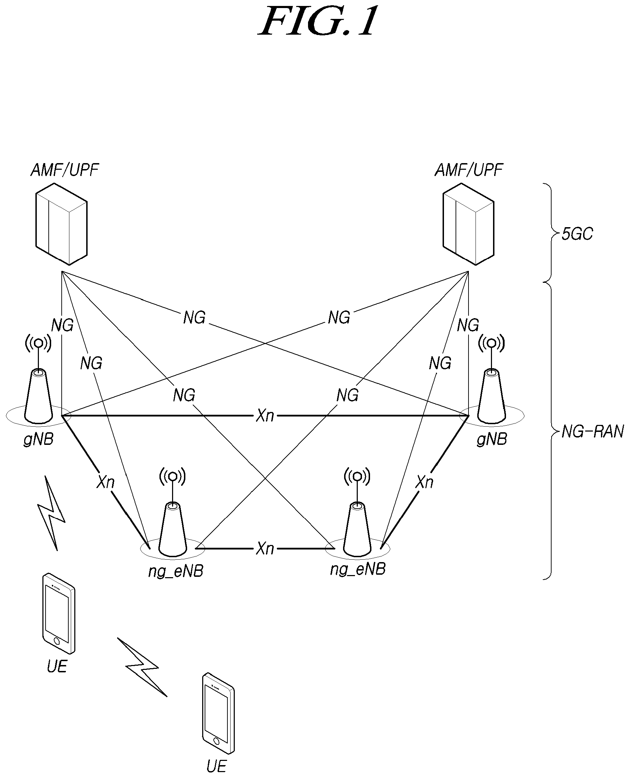

FIG. 1 is a view schematically illustrating an NR system to which the present embodiment is applicable.

Referring to FIG. 1, the NR system is divided into a 5G core network (5GC) and an NG-RAN part. The NG-RAN includes gNBs and ng-eNBs providing user plane (SDAP/PDCP/RLC/MAC/PHY) and user equipment (UE) control plane (RRC) protocol ends. The gNBs or the gNB and the ng-eNB are connected to each other through Xn interfaces. The gNB and the ng-eNB are connected to the 5GC through NG interfaces, respectively. The 5GC may be configured to include an access and mobility management function (AMF) for managing a control plane, such as a UE connection and mobility control function, and a user plane function (UPF) controlling user data. NR supports both frequency bands below 6 GHz (frequency range 1 FR1 FR1) and frequency bands equal to or greater than 6 GHz (frequency range 2 FR2 FR2).

The gNB denotes a base station that provides a UE with an NR user plane and control plane protocol end. The ng-eNB denotes a base station that provides a UE with an E-UTRA user plane and control plane protocol end. The base station described in the present specification should be understood as encompassing the gNB and the ng-eNB. However, the base station may be also used to refer to the gNB or the ng-eNB separately from each other, as necessary.

### <NR Waveform, Numerology, and Frame Structure>

NR uses a CP-OFDM waveform using a cyclic prefix for downlink transmission and uses CP-OFDM or DFT-s-OFDM for uplink transmission. OFDM technology is easy to combine with a multiple-input multiple-output (MIMO) scheme and allows a low-complexity receiver to be used with high frequency efficiency.

Since the three scenarios described above have different requirements for data rates, delay rates, coverage, and the like from each other in NR, it is necessary to efficiently satisfy the requirements for each scenario over frequency bands constituting the NR system. To this end, a technique for efficiently multiplexing radio resources based on a plurality of different numerologies has been proposed.

Specifically, the NR transmission numerology is determined on the basis of subcarrier spacing and a cyclic prefix (CP). As shown in Table 1 below, "µ" is used as an exponential value of 2 so as to be changed exponentially on the basis of 15 kHz.

**[Table 1]**

| µ | Subcarrier spacing | Cyclic prefix | Supported for data | Supported for synch |
|---|---|---|---|---|
| 0 | 15 | normal | Yes | Yes |
| 1 | 30 | normal | Yes | Yes |
| 2 | 60 | Normal, Extended | Yes | No |
| 3 | 120 | normal | Yes | Yes |
| 4 | 240 | normal | No | Yes |

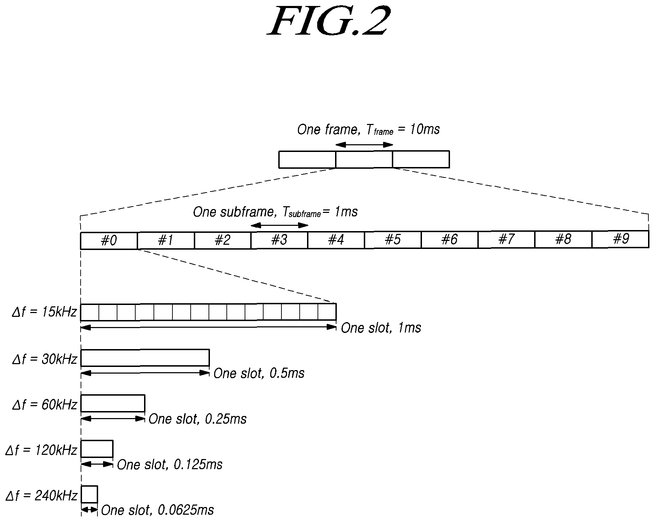

As shown in Table 1 above, NR may have five types of numerologies according to subcarrier spacing. This is different from LTE, which is one of the 4G-communication technologies, in which the subcarrier spacing is fixed to 15 kHz. Specifically, in NR, subcarrier spacing used for data transmission is 15, 30, 60, or 120 kHz, and subcarrier spacing used for synchronization signal transmission is 15, 30, 120, or 240 kHz. In addition, an extended CP is applied only to the subcarrier spacing of 60 kHz. A frame that includes 10 subframes each having the same length of 1 ms and has a length of 10 ms is defined in the frame structure in NR. One frame may be divided into half frames of 5 ms, and each half frame includes 5 subframes. In the case of a subcarrier spacing of 15 kHz, one subframe includes one slot, and each slot includes 14 OFDM symbols. FIG. 2 is a view for explaining a frame structure in an NR system to which the present embodiment may be applied.

Referring to FIG. 2, a slot includes 14 OFDM symbols, which are fixed, in the case of a normal CP, but the length of the slot in the time domain may be varied depending on subcarrier spacing. For example, in the case of a numerology having a subcarrier spacing of 15 kHz, the slot is configured to have the same length of 1 ms as that of the subframe. On the other hand, in the case of a numerology having a subcarrier spacing of 30 kHz, the slot includes 14 OFDM symbols, but one subframe may include two slots each having a length of 0.5 ms. That is, the subframe and the frame may be defined using a fixed time length, and the slot may be defined as the number of symbols such that the time length thereof is varied depending on the subcarrier spacing.

NR defines a basic unit of scheduling as a slot and also introduces a minislot (or a subslot or a non-slot-based schedule) in order to reduce a transmission delay of a radio section. If wide subcarrier spacing is used, the length of one slot is shortened in inverse proportion thereto, thereby reducing a transmission delay in the radio section. A minislot (or subslot) is intended to efficiently support URLLC scenarios, and the minislot may be scheduled in 2, 4, or 7 symbol units.

In addition, unlike LTE, NR defines uplink and downlink resource allocation as a symbol level in one slot. In order to reduce a HARQ delay, the slot structure capable of directly transmitting HARQ ACK/NACK in a transmission slot has been defined. Such a slot structure is referred to as a "self-contained structure", which will be described.

NR was designed to support a total of 256 slot formats, and 62 slot formats thereof are used in 3GPP Rel-15. In addition, NR supports a common frame structure constituting an FDD or TDD frame through combinations of various slots. For example, NR supports i) a slot structure in which all symbols of a slot are configured for a downlink, ii) a slot structure in which all symbols are configured for an uplink, and iii) a slot structure in which downlink symbols and uplink symbols are mixed. In addition, NR supports data transmission that is scheduled to be distributed to one or more slots. Accordingly, the base station may inform the UE of whether the slot is a downlink slot, an uplink slot, or a flexible slot using a slot format indicator (SFI). The base station may inform a slot format by instructing, using the SFI, the index of a table configured through UE-specific RRC signaling. Further, the base station may dynamically instruct the slot format through downlink control information (DCI) or may statically or quasi-statically instruct the same through RRC signaling.

### <Physical Resources of NR>

With regard to physical resources in NR, antenna ports, resource grids, resource elements, resource blocks, bandwidth parts, and the like are taken into consideration.

The antenna port is defined to infer a channel carrying a symbol on an antenna port from the other channel carrying another symbol on the same antenna port. If large-scale properties of a channel carrying a symbol on an antenna port can be inferred from the other channel carrying a symbol on another antenna port, the two antenna ports may have a quasi-co-located or quasi-co-location (QC/QCL) relationship. The large-scale properties include at least one of delay spread, Doppler spread, a frequency shift, an average received power, and a received timing.

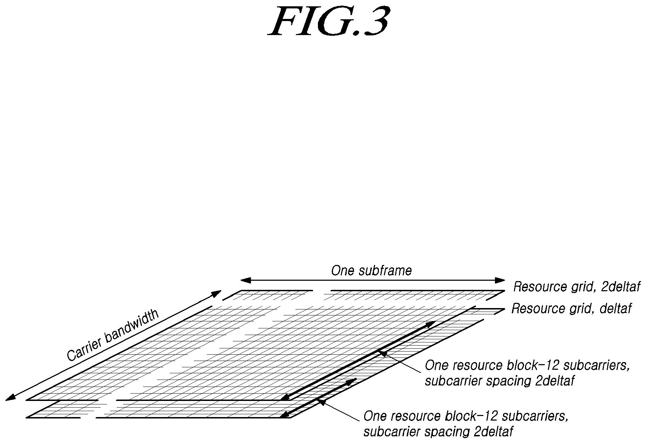

FIG. 3 illustrates resource grids supported by a radio access technology in accordance with embodiments of the present disclosure.

Referring to FIG. 3, resource grids may exist according to respective numerologies because NR supports a plurality of numerologies in the same carrier. In addition, the resource grids may exist depending on antenna ports, subcarrier spacing, and transmission directions.

A resource block includes 12 subcarriers and is defined only in the frequency domain. In addition, a resource element includes one OFDM symbol and one subcarrier. Therefore, as shown in FIG. 3, the size of one resource block may be varied according to the subcarrier spacing. Further, "Point A" that acts as a common reference point for the resource block grids, a common resource block, and a virtual resource block are defined in NR.

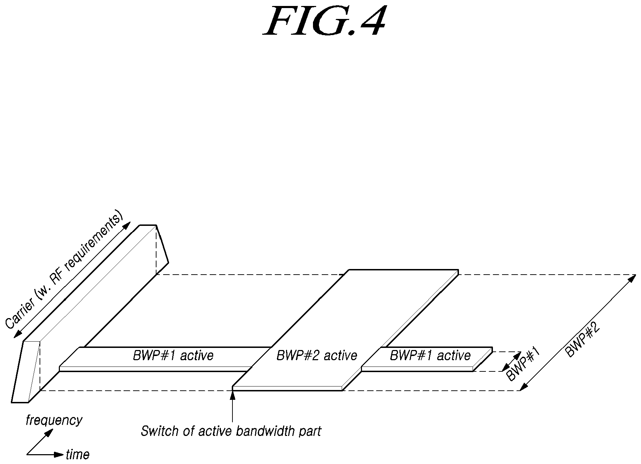

FIG. 4 illustrates bandwidth parts supported by a radio access technology in accordance with embodiments of the present disclosure.

Unlike LTE in which the carrier bandwidth is fixed to 20 MHz, the maximum carrier bandwidth is configured as 50 MHz to 400 MHz depending on the subcarrier spacing in NR. Therefore, it is not assumed that all UEs use the entire carrier bandwidth. Accordingly, as shown in FIG. 4, bandwidth parts (BWPs) may be specified within the carrier bandwidth in NR so that the UE may use the same. In addition, the bandwidth part may be associated with one numerology, may include a subset of consecutive common resource blocks, and may be activated dynamically over time. The UE has up to four bandwidth parts in each of the uplink and the downlink. The UE transmits and receives data using an activated bandwidth part during a given time.

In the case of a paired spectrum, uplink and downlink bandwidth parts are configured independently. In the case of an unpaired spectrum, in order to prevent unnecessary frequency re-tuning between a downlink operation and an uplink operation, the downlink bandwidth part and the uplink bandwidth part are configured in pairs to share a center frequency.

### <Initial Access in NR>

In NR, a UE performs a cell search and a random access procedure in order to access and communicates with a base station.

The cell search is a procedure of the UE for synchronizing with a cell of a corresponding base station using a synchronization signal block (SSB) transmitted from the base station and acquiring a physical-layer cell ID and system information.

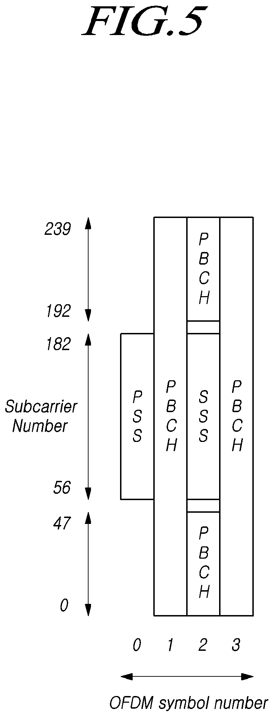

FIG. 5 illustrates an example of a synchronization signal block in a radio access technology in accordance with embodiments of the present disclosure.

Referring to FIG. 5, the SSB includes a primary synchronization signal (PSS) and a secondary synchronization signal (SSS), which occupy one symbol and 127 subcarriers, and PBCHs spanning three OFDM symbols and 240 subcarriers.

The UE monitors the SSB in the time and frequency domain, thereby receiving the SSB.

The SSB may be transmitted up to 64 times for 5 ms. A plurality of SSBs are transmitted by different transmission beams within a time of 5 ms, and the UE performs detection on the assumption that the SSB is transmitted every 20 ms based on a specific beam used for transmission. The number of beams that may be used for SSB transmission within 5 ms may be increased as the frequency band is increased. For example, up to 4 SSB beams may be transmitted at a frequency band of 3 GHz or less, and up to 8 SSB beams may be transmitted at a frequency band of 3 to 6 GHz. In addition, the SSBs may be transmitted using up to 64 different beams at a frequency band of 6 GHz or more.

One slot includes two SSBs, and a start symbol and the number of repetitions in the slot are determined according to subcarrier spacing as follows.

Unlike the SS in the typical LTE system, the SSB is not transmitted at the center frequency of a carrier bandwidth. That is, the SSB may also be transmitted at the frequency other than the center of the system band, and a plurality of SSBs may be transmitted in the frequency domain in the case of supporting a broadband operation. Accordingly, the UE monitors the SSB using a synchronization raster, which is a candidate frequency position for monitoring the SSB. A carrier raster and a synchronization raster, which are the center frequency position information of the channel for the initial connection, were newly defined in NR, and the synchronization raster may support a fast SSB search of the UE because the frequency spacing thereof is configured to be wider than that of the carrier raster.

The UE may acquire an MIB over the PBCH of the SSB. The MIB (master information block) includes minimum information for the UE to receive remaining minimum system information (RMSI) broadcast by the network. In addition, the PBCH may include information on the position of the first DM-RS symbol in the time domain, information for the UE to monitor SIB1 (e.g., SIB1 numerology information, information related to SIB1 CORESET, search space information, PDCCH-related parameter information, etc.), offset information between the common resource block and the SSB (the position of an absolute SSB in the carrier is transmitted via SIB1), and the like. The SIB1 numerology information is also applied to some messages used in the random access procedure for the UE to access the base station after completing the cell search procedure. For example, the numerology information of SIB1 may be applied to at least one of the messages 1 to 4 for the random access procedure.

The above-mentioned RMSI may mean SIB1 (system information block 1), and SIB1 is broadcast periodically (e.g., 160 ms) in the cell. SIB1 includes information necessary for the UE to perform the initial random access procedure, and SIB1 is periodically transmitted over a PDSCH. In order to receive SIB1, the UE must receive numerology information used for the SIB1 transmission and the CORESET (control resource set) information used for scheduling of SIB1 over a PBCH. The UE identifies scheduling information for SIB1 using SI-RNTI in the CORESET. The UE acquires SIB1 on the PDSCH according to scheduling information. The remaining SIBs other than SIB1 may be periodically transmitted, or the remaining SIBs may be transmitted according to the request of the UE.

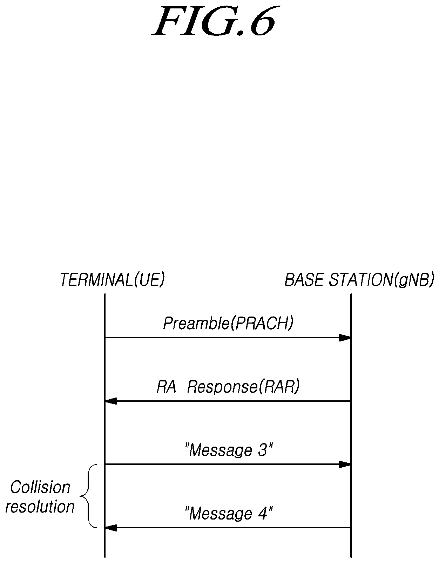

FIG. 6 is a view for explaining a random access procedure in a radio access technology to which the present embodiment is applicable.

Referring to FIG. 6, if a cell search is completed, the UE transmits a random access preamble for random access to the base station. The random access preamble is transmitted over a PRACH. Specifically, the random access preamble is periodically transmitted to the base station over the PRACH that includes consecutive radio resources in a specific slot repeated. In general, a contention-based random access procedure is performed when the UE makes initial access to a cell, and a non-contention-based random access procedure is performed when the UE performs random access for beam failure recovery (BFR).

The UE receives a random access response to the transmitted random access preamble. The random access response may include a random access preamble identifier (ID), UL Grant (uplink radio resource), a temporary C-RNTI (temporary cell-radio network temporary identifier), and a TAC (time alignment command). Since one random access response may include random access response information for one or more UEs, the random access preamble identifier may be included in order to indicate the UE for which the included UL Grant, temporary C-RNTI, and TAC are valid. The random access preamble identifier may be an identifier of the random access preamble received by the base station. The TAC may be included as information for the UE to adjust uplink synchronization. The random access response may be indicated by a random access identifier on the PDCCH, i.e., a random access-radio network temporary identifier (RA-RNTI).

Upon receiving a valid random access response, the UE processes information included in the random access response and performs scheduled transmission to the base station. For example, the UE applies the TAC and stores the temporary C-RNTI. In addition, the UE transmits, to the base station, data stored in the buffer of the UE or newly generated data using the UL Grant. In this case, information for identifying the UE must be included in the data.

Lastly, the UE receives a downlink message to resolve the contention.

### <NR CORESET>

The downlink control channel in NR is transmitted in a CORESET (control resource set) having a length of 1 to 3 symbols, and the downlink control channel transmits uplink/downlink scheduling information, an SFI (slot format index), TPC (transmit power control) information, and the like.

As described above, NR has introduced the concept of CORESET in order to secure the flexibility of a system. The CORESET (control resource set) refers to a time-frequency resource for a downlink control signal. The UE may decode a control channel candidate using one or more search spaces in the CORESET time-frequency resource. CORESET-specific QCL (quasi-colocation) assumption is configured and is used for the purpose of providing information on the characteristics of analogue beam directions, as well as delay spread, Doppler spread, Doppler shift, and an average delay, which are the characteristics assumed by existing QCL.

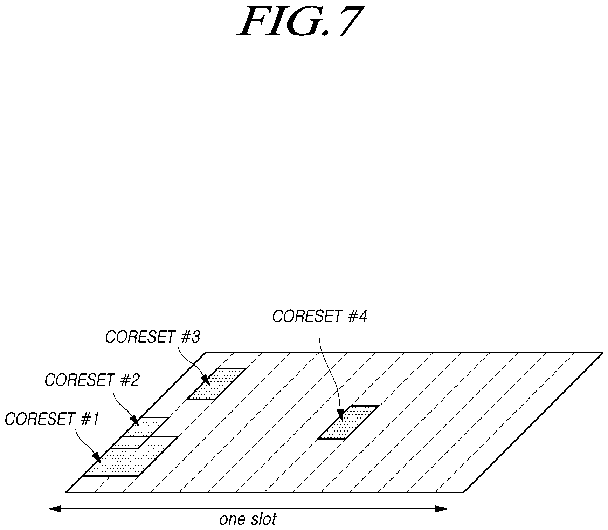

FIG. 7 illustrates CORESET.

Referring to FIG. 7, CORESETs may exist in various forms within a carrier bandwidth in a single slot, and the CORESET may include a maximum of 3 OFDM symbols in the time domain. In addition, the CORESET is defined as a multiple of six resource blocks up to the carrier bandwidth in the frequency domain.

A first CORESET, as a portion of the initial bandwidth part, is designated (e.g., instructed, assigned) through an MIB in order to receive additional configuration information and system information from a network. After establishing a connection with the base station, the UE may receive and configure one or more pieces of CORESET information through RRC signaling.

### <LTE sidelink>

In the LTE system, for providing device-to-device communication and vehicle-to-everything (V2X) (in particular, vehicle-to-vehicle (V2V)) service, designs for a radio channel and a radio protocol for direct communication (i.e., sidelink) between devices have been developed.

With respect to the sidelink, a synchronization signal (PSSS/SSSS) for synchronizing between a radio sidelink transmission end and a radio sidelink reception end, and a physical sidelink broadcasting channel (PSBCH) for transmitting/receiving a sidelink master information block (MIB) related to this have been defined. Further, designs have been conducted on a physical sidelink discovery channel (PSDCH) for transmitting/receiving discovery information, a physical sidelink control channel (PSCCH) for transmitting/receiving sidelink control information (SCI), and a physical sidelink shared channel (PSSCH) for transmitting/receiving sidelink data.

In order to assign a radio resource for the sidelink, two modes have been developed, i.e., i) mode 1 in which a base station assigns a radio resource and ii) mode 2 in which a UE selects and assigns a radio resource from a radio resource pool. Further, in order to satisfy the V2X scenario in the LTE system, a related technology has been required to be developed additionally.

In such an environment, the 3GPP have derived 27 service scenarios related to vehicle recognition/detection in Rel-14, and determined key performance requirements according to road conditions. In addition, the 3GPP have derived 25 service scenarios, such as vehicle platooning, advanced driving, remote driving, an extended sensor, or the like, evolved from Rel-14, and determined 6 performance requirements in Rel-15.

In order to satisfy such performance requirements, developments have been conducted for improving the performance of the sidelink technology developed based on the typical D2D communication to meet requirements of the V2X. In particular, in order to apply to the C-V2X (Cellular-V2X), a technology for improving a design of the physical layer of the sidelink to be adapted to a high-speed environment, a resource assignment technology, a synchronization technology may be selected as further study items.

The sidelink described below means a link used in D2D communication after Rel-12 of the 3GPP and V2X communication after Rel-14, and the terms for each channel, synchronization signal, and resource are described using equal terms without differently being defined according to requirements of the D2D communication, requirements of the V2X communication in Rel-14 and Rel-15. This is for convenience of description and ease of understanding, and when needed, embodiments will be described by focusing on a difference of the sidelink satisfying V2X scenario requirements relative to the sidelink for the D2D communication in Rel-12/13. Accordingly, the terms related to the sidelink discussed below are classified into D2D communication, V2X communication, and C-V2X communication for merely comparison between them and ease of understanding; therefore, such terms are not limited to a specific scenario.

### <Resource assignment>

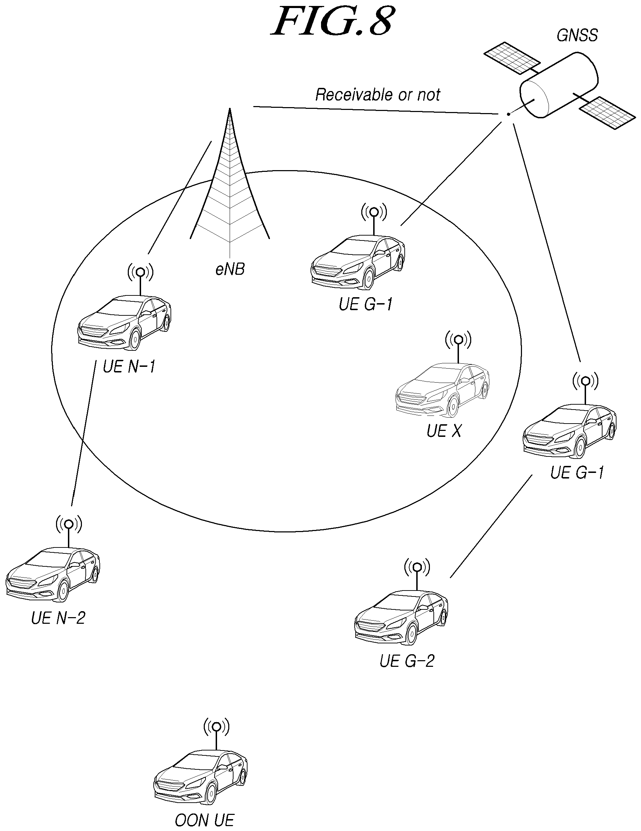

FIG. 8 illustrates various scenarios for V2X communication.

Referring to FIG. 8, a V2X device (represented to a vehicle; however, may be replaced with other devices, such as a user equipment (UE), etc.) may be located in coverage of a base station (an eNB, a gNB, or an ng-eNB), or located outside of coverage of the base station. For example, communication may be performed between UEs (e.g., UE N-1, UE G-1, UE X) in coverage of the base station, or communication may be performed between a UE in coverage of the base station and a UE (e.g., UE N-1, UE N-2) outside of coverage of the base station. Alternatively, communication may be performed between UEs (e.g., UE G-1, UE G-2) out of coverage of the base station.

In such various scenarios, it is necessary to assign a radio resource for enabling a corresponding UE to perform communication using the sidelink. The assignment of the radio resource includes a method of a base station for handling the assignment of the radio resource and a method of a UE on its own selects and assigns the radio resource.

Specifically, in the D2D, for enabling a UE to assign a resource, two modes are defined, that is, i) a centralized mode (mode 1) in which a base station intervenes in the selection and management of the resource, and ii) a distributed mode (mode 2) in which a UE selects randomly one or more of pre-configured resources. Similar to the D2D, other modes are defined, such as, iii) a third mode (mode 3) in which a base station intervenes in the selection and management of the resource in the C-V2X, and iv) a fourth mode (mode 4) in which a vehicle directly selects a resource in the V2X. In the third mode (mode 3), a base station provides a schedule of a scheduling assignment (SA) pool resource area and a data pool resource area assigned to this to a transmitter UE.

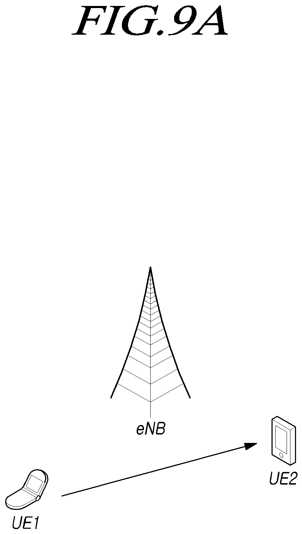

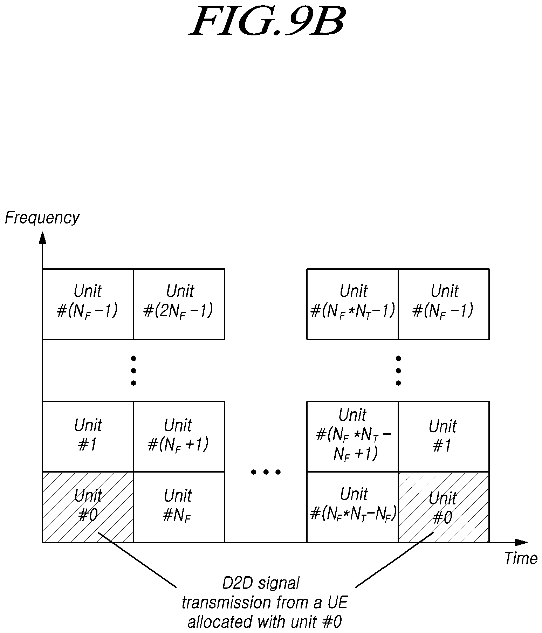

FIG. 9A illustrates a first user equipment (UE1) and a second user equipment (UE2) performing sidelink communication, and FIG. 9B illustrates an example of resource pools used by the UEs.

Referring to FIG. 9, a base station is represented as an eNB; however, may be a gNB or an ng-eNB as described above. Further, the UEs are represented as mobile terminals; however, vehicles, infrastructures, or the like may be applied variously depending on scenarios or situations.

In FIG.9A, the transmitter UE (UE 1) may select a resource unit corresponding to a specific resource within a resource pool including a set of resources, and transmit a sidelink signal using the resource unit. The receiver UE (UE 2) may be configured with a resource pool over which the UE 1 is allowed to transmit a signal, and detect a transmission signal from the UE 1.

If the UE 1 is in coverage of the base station, that is, available to receive services or signals from the base station, the base station may provide the resource pool to the UE 1. If the UE 1 is out of coverage of the base station , that is, unavailable to receive services or signals from the base station, the resource pool may be determined as one or more resources which are pre-configured or provided by another UE. Normally, the resource pool is made up of a plurality of resource units, and each UE may select one or more resource units and use the selected resource unit(s) for transmitting a sidelink signal.

Referring to FIG. 9B, the entire frequency resource is divided into NF frequency resources, and the entire time resource is divided into NT time resources. Thus, a total of NF*NT resource units can be defined. In this case, it is possible to express that a corresponding resource pool is repeated at a period of NT subframes. In particular, one resource unit may be configured to be provided periodically and repeatedly, as illustrated in FIG. 9B.

The resource pool may be classified into several types according to a certain criterion. For example, the resource pool may be classified into several types according to contents of a sidelink signal transmitted over each resource pool. As one example, the contents of the sidelink signal may be classified, and a separate resource pool may be configured for each of the contents. Scheduling assignment (SA), a sidelink channel, a discovery channel, or the like may be examples of the contents of the sidelink signal.

The SA may be a signal including information, such as, a location of a resource used to transmit a subsequent sidelink data channel by a transmitter UE, a modulation and coding scheme (MCS) that is needed to demodulate a data channel, a MIMO transmission scheme, timing advance (TA), or the like. This signal may be transmitted by being multiplexed with sidelink data over an identical resource unit as well. In this case, the SA resource pool may mean a pool of resources over which the SA is transmitted by being multiplexed with the sidelink data.

An FDM scheme applied to the V2X communication may lead a time delay until a data resource is assigned after a SA resource has been assigned to be reduced. For example, it is possible to consider a non-adjacent scheme in which a control channel resource and a data channel resource are split in time domain in one subframe, an adjacent scheme in which a control channel and a data channel are consecutively assigned in one subframe, or the like.

When the sidelink data along with the SA are multiplexed and transmitted over an identical resource unit, a sidelink data channel only in a different form from SA information may be transmitted over a resource pool for the sidelink data channel. In other words, resource elements used to transmit SA information over one or more individual resource units within a SA resource pool may be used still for transmitting sidelink data in a sidelink data channel resource pool. The discovery channel may be a resource pool for a message for enabling a transmitter UE to transmit information, such as an ID of the transmitter UE, or the like, and a neighboring UE to discover the transmitter UE. Even when contents of the sidelink signal are equal, different resource pools may be used according to transmission and/or reception characteristics of the sidelink signal.

For example, in even the case of an identical sidelink data channel or a discovery message, a different resource pool may be used according to a method of determining a transmission timing of a sidelink signal (e.g., whether the sidelink signal is transmitted at the time of receiving a synchronization reference signal or transmitted by applying a certain TA from the time of receiving the synchronization reference signal) or a method of assigning a resource (e.g., whether a base station dedicates a resource for transmitting a signal to a transmitter UE or whether a transmitter UE on its own selects a resource for transmitting a signal in a pool), a signal format (e.g., the number of symbols occupied by each sidelink signal in one subframe, the number of subframes used for transmitting one sidelink signal), a signal strength of from a base station, a transmission power strength of a sidelink UE, or the like.

### <synchronization signal>

As described above, a V2X communication UE may be located out of coverage of a base station. In even this situation, it is necessary for communication using the sidelink to be performed. To do this, it is important for a UE located out of coverage of the base station to achieve synchronization.

Hereinafter, a method of achieving time and frequency synchronization in sidelink communication, particularly in communication between vehicles, between a vehicle and a UE, or between a vehicle and a communication network will be described based on the description above.

The D2D communication utilizes a sidelink synchronization signal (SLSS), which is a synchronization signal transmitted from a base station for time synchronization between UEs. In the C-V2X, a satellite system (the Global Navigation Satellite System (GNSS)) may be additionally considered for enhancing synchronization performance. In this case, priority may be given to synchronization establishment or a base station may indicate information on priority. For example, when determining its transmission synchronization, a UE selects a synchronization signal directly transmitted from a base station as a highest priority, and, when the UE is out of coverage of the base station, synchronizes with the SLSS transmitted from another UE in coverage of the base station as a higher priority.

Since a wireless terminal (hereinafter, for convenience of description, may be referred to as the UE as well) installed in a vehicle, or a UE mounted in the vehicle has a less problem with battery consumption and can use a satellite signal such as the GPS for navigation purposes, the satellite signal may be used for configuring time or frequency synchronization between UEs. The satellite signal may include, as well as the Global Positioning System (GPS), the GLObal NAvigation Satellite System (GLONAS), GALILEO, BEIDOU, or the like.

The sidelink synchronization signal may include a primary sidelink synchronization signal (PSSS), a secondary sidelink synchronization signal (SSSS), or the like. The PSSS may include a Zadoff-chu sequence with a pre-configured length, a structure similar to the PSS, a structure changed from the PSS, or a structure in which the PSS is repeated. Unlike a DL PSS, a different Zadoff-chu root index (e.g., 26, 37) may be used. The SSSS may include an M-sequence, a structure similar to the SSS, a structure changed from the SSS, or a structure in which the SSS is repeated. In a situation where UEs synchronize with a base station, the SRN is served as the base station, and the SLSS is served as the PSS or the SSS.

Unlike the PSS/SSS of DL, the PSSS/SSSS uses an UL subcarrier mapping method. A physical sidelink synchronization channel (PSSCH) may be a channel for transmitting system information (e.g., information related to the SLSS, a duplex mode (DM), a TDD UL/DL configuration, information related to a resource pool, types of applications related to the SLSS, a subframe offset, broadcast information, or the like) which is basic information that the UE is required to identify first before transmitting/receiving a sidelink signal. The PSSCH may be transmitted over a subframe identical or subsequent to the SLSS. The DM-RS may be used for demodulation of the PSSCH.

The SRN may be a node for transmitting the SLSS, or the PSSCH. The SLSS may be in the form of a specific sequence, and the PSSCH may be a sequence representing specific information or in the form of a codeword after pre-defined channel coding has been performed. Here, a base station or a specific sidelink UE may be served as the SRN. A UE may be served as the SRN in the case of partial network coverage or out-of-network-coverage.

When needed, the SLSS may be relayed, for example, through multi-hop, for sidelink communication with an out-of-coverage UE. Relaying a synchronization signal in description below includes, as well as directly relaying a synchronization signal of a base station, transmitting a sidelink synchronization signal in a separate format at the time of receiving the synchronization signal. Like this, since the sidelink synchronization signal is relayed, direct communication between an in-coverage UE and an out-of-coverage UE may be performed.

### <NR sidelink>

As described above, unlike the V2X based on the LTE system, NR-based V2X technology is required to be developed for satisfying complex requirements as in autonomous driving.

In accordance with embodiments of the present disclosure, it is possible to provide a flexible V2X service in more diverse environments by applying a frame structure, numerology, a channel transmission/reception procedure, or the like of the NR to the NR V2X. To this end, it is necessary to develop technologies, such as, a resource sharing technology between a base station and a UE, a sidelink carrier aggregation technology (CA), a partial sensing technology for a UE held by a pedestrian, a short transmission time interval (sTTI), or the like.

In the NR V2X, it has been determined to support unicast or groupcast, as well as broadcast used in the LTE V2X. In this case, it also has been determined to use a target group ID for the unicast or the groupcast, and but it has been determined to discuss later whether to use a source ID.

Further, as it has been determined to support HARQ for QOS, it has been determined that a HARQ process ID is included in control information. In the LTE HARQ, a PUCCH for the HARQ is transmitted after 4 subframes after DL has been transmitted. In the NR HARQ, for feedback timing, a PUCCH resource and a feedback timing may be indicated using a PUCCH resource indicator in DCI format 1_0 or 1_1 PUCCH or a HARQ feedback timing indicator in response to the PDSCH (PDSCH-to-HARQ feedback timing indicator).

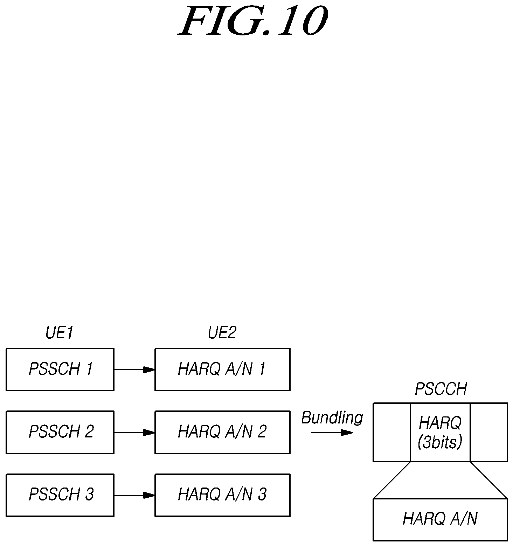

FIG. 10 illustrates a method of bundling and transmitting HARQ feedback information in the V2X.

Referring to FIG. 10, in the LTE V2X, separate HARQ ACK/NACK information is not transmitted in order to reduce system overhead, and data are allowed to be retransmitted once according to discretion of a transmitter UE for data transmission safety. However, in the NR V2X, in terms of data transmission stability, HARQ ACK/NACK information may be transmitted. In this case, overhead may be reduced by bundling and transmitting the corresponding information.

That is, when a transmitter UE UE1 transmits three data transmissions to a receiver UE UE2, and then the receiver UE generates HARQ ACK/NACK information in response to the transmissions, this may be bundled and transmitted over a PSCCH. FIG. 10 illustrates that HARQ ACK/NACK is transmitted over the PSCCH. However, the HARQ ACK/NACK may be transmitted over a separate channel or another channel, and the bundled HARQ information may be configured with 3 bits or less.

In frequency range 1 (FR1) for a frequency range of 3GHz or less, 15 kHz, 30 kHz, 60 kHz, and 120 kHz have been discussed as a candidate subcarrier spacing (SCS). In frequency range 2 (FR2) for a frequency range exceeding 3GHz, 30 kHz, 60 kHz, 120 kHz, and 240 kHz have been discussed as a candidate subcarrier spacing (SCS). In the NR V2X, a minislot (e.g., 2/4/7 symbols) smaller than 14 symbols may be supported as a unit of minimum scheduling.

The DM-RS, the PT-RS, the CSI-RS, the SRS, and the AGC training signal have been discussed as a candidate of the RS.

### Synchronization mechanism

NR V2X sidelink synchronization may include one or more sidelink synchronization signals and the PSBCH, and a sidelink source may include a UE in addition to the GNSS, and/or the gNB.

### Resource assignment

At least two sidelink resource allocation modes, i.e., mode 3 and mode 4, may by defined for NR V2X sidelink communication. In mode 3, a base station schedules one or more sidelink resources used by a UE for sidelink transmission. In mode 4, a UE determines one or more resources within one or more sidelink resources configured by a base station or one or more pre-configured sidelink resources.

Mode 4 may cover the following resource assignment sub-modes. That is, UE may automatically select a sidelink resource for transmission, help to select a sidelink resource for other UE(s), be configured with grant configured for sidelink transmission, or schedule the sidelink transmission of other UE(s).

### V2X resource pool (sensing and selection windows)

A V2X UE may transmit a message (or a channel) over a pre-defined (or signaled) resource pool. The resource pool may mean a set of one or more resources pre-defined for enabling the UE to perform the V2X operation (or in the UE capable of performing the V2X operation). In this case, the resource pool may be defined in terms of time-frequency. The V2X transmission resource pool may be defined as various types.

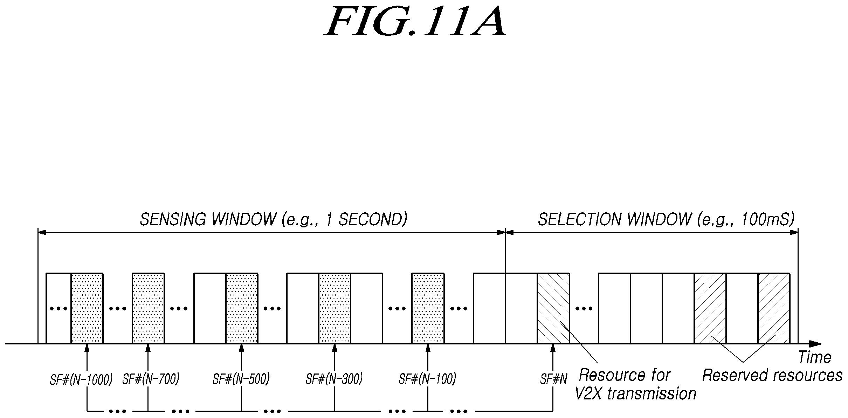

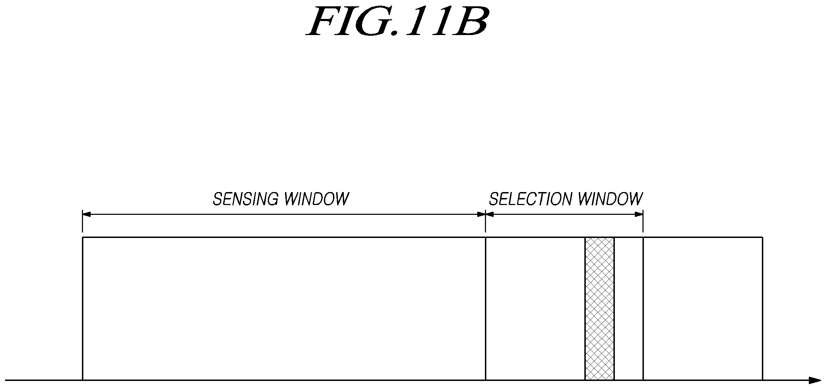

FIGS. 11A and 11B illustrate a type of a V2X transmission resource pool.

Referring to FIG. 11A, V2X transmission resource pool #A may be a resource pool over that allows partial sensing only. A V2X transmission resource selected by the partial sensing is remained semi-statically at a regular interval.

Referring to FIG. 11B, V2X transmission resource pool #B may be a resource pool over that allows a random selection only. In V2X transmit resource pool #B, a UE does not perform partial sensing, and may randomly select a V2X transmission resource in a selection window.

As one example, unlike a resource pool over which partial sensing only is allowed, in a resource pool over which the random selection only is allowed, a selected resource may be configured/signaled not to be semi-statically reserved. In order for a UE to perform a V2X message transmission operation over a V2X transmission resource pool, a base station may cause the UE not to perform a sensing operation (based on scheduling assignment decoding/energy measurement).

Although not illustrated in FIGS. 11A and 11B, a resource pool over allowing both the partial sensing and the random selection may be used as well. A base station may notify a UE that a V2X resource may be selected by either of the partial sensing and the random selection.

In this specification, a frequency, a frame, a subframe, a resource, a resource block, a region, a band, a subband, a control channel, a data channel, a synchronization signal, various reference signals, various signals, or various messages in relation to NR (New Radio) may be interpreted as meanings used at present or in the past or as various meanings to be used in the future.

### NR(New Radio)

The NR is required to be designed not only to provide an improved data transmission rate but also to meet various QoS requirements for each detailed and specific usage scenario, compared to the LTE/LTE-Advanced. In particular, an enhanced mobile broadband (eMBB), massive machine-type communication (mMTC), and ultra-reliable and low latency communication (URLLC) are defined as representative usage scenarios of the NR. In order to meet requirements for each usage scenario, it is required to design the NR to have a more flexible frame structure as compared to the LTE/LTE-Advanced.

Since each usage scenario imposes different requirements for data rates, latency, coverage, etc., there arises a need for a method of efficiently multiplexing numerology-based (e.g., a subcarrier spacing (SCS), a subframe, a transmission time interval (TTI), etc.) radio resource units different from each other, as a solution for efficiently satisfying requirements according to usage scenarios over a frequency band provided to an NR system.

To this end, there have been discussions on i) methods of multiplexing numerologies having subcarrier spacing (SCS) values different from one another based on TDM, FDM or TDM/FDM over one NR carrier, and ii) methods of supporting one or more time units in configuring a scheduling unit in the time domain. In this regard, in the NR, a definition of a subframe has been given as one type of a time domain structure. In addition, as a reference numerology to define a corresponding subframe duration, a single subframe duration is defined as having 14 OFDM symbols of normal CP overhead based on 15 kHz subcarrier spacing (SCS), like the LTE. Therefore, the subframe of the NR has the time duration of 1 ms.

Unlike the LTE, since the subframe of the NR is an absolute reference time duration, a slot and a mini-slot may be defined as a time unit for actual UL/DL data scheduling. In this case, the number of OFDM symbols which constitutes a slot, a value of y, has been defined as y = 14 regardless of the numerology.

Therefore, a slot may be made up of 14 symbols. In accordance with a transmission direction for a corresponding slot, all symbols may be used for DL transmission or UL transmission, or the symbols may be used in the configuration of a DL portion + a gap + a UL portion.

Further, a mini-slot has been defined to be made up of fewer symbols than the slot in a numerology (or SCS), and as a result, a short time domain scheduling interval may be configured for UL/DL data transmission or reception based on the mini-slot. Also, a long time domain scheduling interval may be configured for the UL/DL data transmission or reception by slot aggregation.

Particularly, in the case of the transmission or reception of latency critical data, such as the URLLC, when scheduling is performed on a slot basis based on 1 ms (14 symbols) defined in a frame structure based on a numerology having a small SCS value, for example, 15 kHz, latency requirements may be difficult to be satisfied. To this end, a mini-slot made up of fewer OFDM symbols than the slot may be defined, and thus the scheduling for the latency critical data, such as the URLLC, may be performed based on the mini-slot.

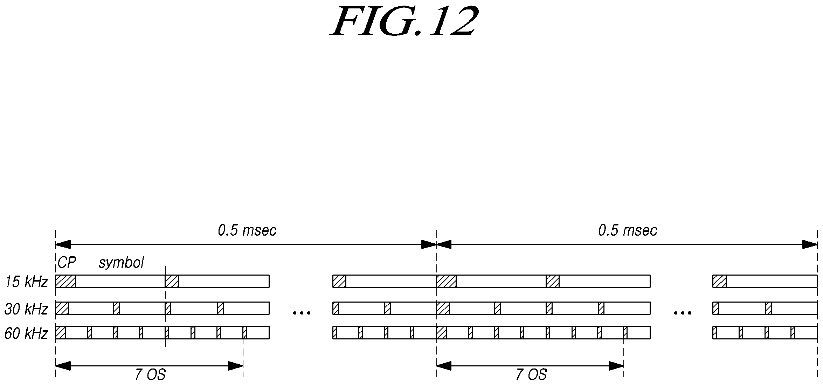

As described above, it is also contemplated to schedule the data according to the latency requirement based on the length of the slot (or minislot) defined by the numerology by supporting the numerology with the different SCS values in one NR carrier by multiplexing them in the TDM and/or FDM manner. For example, as shown in FIG. 12, when the SCS is 60 kHz, the symbol length is reduced to about 1/4 of that of the SCS 15 kHz. Therefore, when one slot is made up of 14 OFDM symbols, the slot length based on 15 kHz is 1 ms whereas the slot length based on 60 kHz is reduced to about 0.25 ms.

Thus, since different SCSs or different TTI lengths from one another are defined in the NR, technologies have been developed for satisfying requirements of each of the URLLC and the eMBB.

### <Bandwidth part; BWP >

The typical LTE system supports scalable bandwidth operations for a LTE CC (component carrier). That is, according to a frequency deployment scenario, an LTE provider may configure a bandwidth of a minimum of 1.4 MHz to a maximum of 20 MHz in configuring a single LTE CC, and a normal LTE UE supports a transmission/reception capability of a bandwidth of 20 MHz for a single LTE CC.

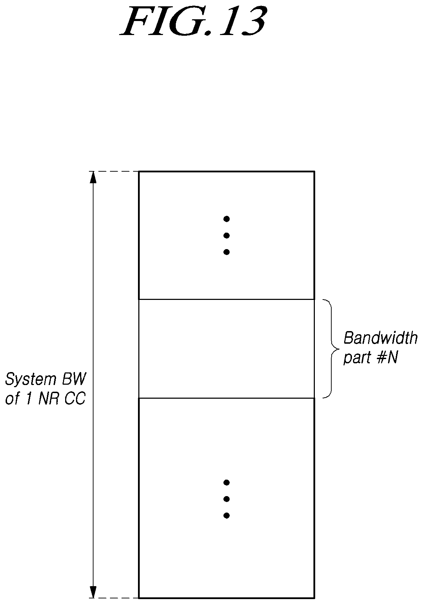

However, the NR is designed to support the UE of NR having different transmission/reception bandwidth capabilities over a single wideband NR CC. Accordingly, it is required to configure one or more bandwidth parts (BWPs) including subdivided bandwidths for an NR CC as shown FIG. 13, thereby supporting a flexible and wider bandwidth operation through configuration and activation of different bandwidth parts for respective UEs.

Specifically, one or more bandwidth parts may be configured through a single serving cell configured for a UE in NR, and the UE is defined to activate one downlink (DL) bandwidth part and one uplink (UL) bandwidth part to use the same for uplink/downlink data transmission/reception in the corresponding serving cell. In addition, in the case where a plurality of serving cells is configured for the UE (i.e., the UE to which CA is applied), the UE is also defined to activate one downlink bandwidth part and/or one uplink bandwidth part in each serving cell to use the same for uplink/downlink data transmission/reception by utilizing radio resources of the corresponding serving cell.

Specifically, an initial bandwidth part for an initial access procedure of a UE may be defined in a serving cell; one or more UE-specific bandwidth parts may be configured for each UE through dedicated RRC signaling, and a default bandwidth part for a fallback operation may be defined for each UE.

It is possible to define simultaneously activating and using a plurality of downlink and/or uplink bandwidth parts according to the capability of the UE and the configuration of the bandwidth parts in a serving cell. However, NR rel-15 defined activating and using only one downlink (DL) bandwidth part and one uplink (UL) bandwidth part at a time.

### <NR sidelink>

To provide LTE and NR-based V2X services, a direct communication protocol design between UEs based on an LTE or NR framework has been introduced. In particular, there is ongoing design work for a wireless communication protocol related to NR sidelink for direct communication between UEs based on NR. The NR sidelink supports unicast and groupcast-based sidelink transmission in addition to the typical broadcast-based LTE sidelink transmission method. Further, to that end, the NR sidelink supports HARQ operation and CSI-based link adaptation.

Accordingly, additional design has been made for i) a physical sidelink feedback channel (PSFCH) for feedback of the HARQ ACK/NACK which is sidelink feedback control information, as well as the relevant radio signal/channels designed in typical LTE sidelink communication, i.e., PSSS/SSSS which is the synchronization signal for synchronization between the radio sidelink transmission end and reception end and the physical sidelink broadcasting channel (PSBCH) for sidelink master information block (MIB) transmission/reception related thereto, ii) the physical sidelink control channel (PSCCH) for sidelink control information (SCI) transmission/reception including sidelink scheduling control information, and iii) the physical sidelink shared channel for sidelink data transmission/reception. Further, various HARQ ACK/NACK feedback methods based on unicast and group cast have been defined.

As the subcarrier spacing (SCS) of the OFDM communication system is varied in NR, the frame structure of the sidelink to be used for information transmission and reception in sidelink communication needs to be changed as well.

In the present embodiments, the sidelink signal may use the CP-OFDM-type waveform of the CP-OFDM type and the DFT-s-OFDM type. Further, the sidelink may use the following subcarrier spacing (hereinafter, 'SCS'). For example, in frequency range (FR) 1 which uses a frequency band less than 6GHz, SCSs of 15kHz, 30kHz, and 60kHz are used. In this case, the 60kHz spacing, which exhibits the best performance, may be set to be used. In FR2 which uses a frequency band of 6GHz or more, spacings of 60kHz and 120kHz are used, and the 60kHz band may primarily be used.

Further, the sidelink uses a cyclic prefix (CP) to prevent modulation that may arise during the course of wireless communication transmission/reception, and its length may be set to be equal to the length of the normal CP of the NR Uu interface. If necessary, an extended CP may be applied.

Further, regarding a scenario for sidelink communication, there is a likelihood that multiple UEs gather in a predetermined range and perform communication, as when platooning. In this case, the radio resources for sidelink communication may frequently collide with each other. In particular, a procedure for settling resource conflict may be required in Mode 2 in which the UE selects a sidelink communication resource from a predetermined resource pool based on a sensing operation, unlike in Mode 1 in which the base station allocates and schedules a sidelink communication resource.

Hereinafter, a method for performing sidelink communication using coordination information will be described with reference to the related drawings.

In the disclosure, reception UE (which may be referred to hereinafter as Rx UE or UE-A) means a UE that receives the PSCCH or its corresponding PSSCH through the sidelink. Transmission UE (which may be referred to hereinafter as Tx UE or UE-B) means a UE that transmits the PSCCH and its corresponding PSSCH through the sidelink.

In the disclosure, coordination information means information that is transmitted to address issues due to the overlap between radio resources in sidelink communication. However, the embodiments are limited thereto. For example, the coordination information may also be referred to as adjustment information or assistance information which has the same meaning.

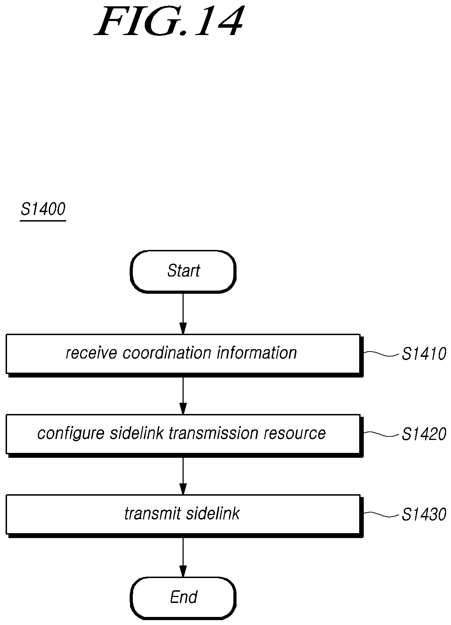

FIG. 14 is a flowchart illustrating a procedure S1400 for performing sidelink communication using coordination information by a transmission UE according to an embodiment.

Referring to FIG. 14, the transmission UE may receive, from the reception UE, coordination information indicating at least one preferred resource set or at least one non-preferred resource set (S1410).

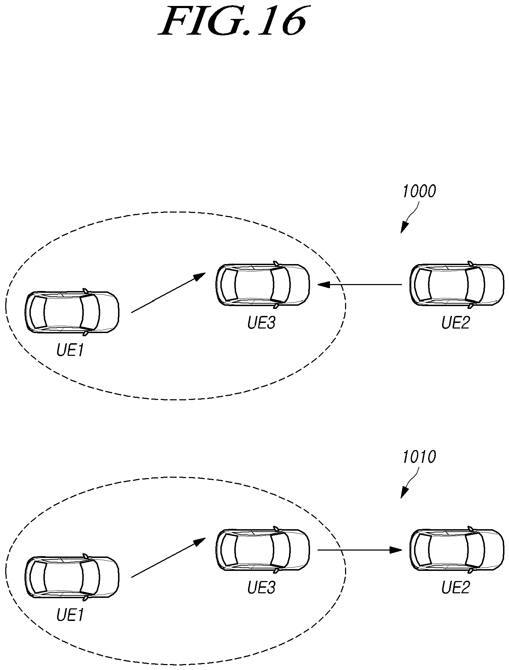

As described above, in sidelink mode 2, each UE allocates a resource and performs communication. Accordingly, a resource overlap may occur. In this case, it is needed to share the allocated resource information between the UEs and coordinate resource allocation. In other words, FIG. 16 shows examples requiring inter-UE coordination through transmission/reception of coordination information in sidelink communication.

For example, the example 1000 on the upper side of FIG. 16 shows that UE1 and UE2 each are positioned outside the sensing range for radio resource selection in mode 2. Accordingly, such an occasion may arise where they select the same radio resource for sidelink transmission to UE3. In this case, from the point of view of UE1 and UE2, no conflict occurs in each radio resource selection and data transmission. However, when UE3 receives sidelink data from UE1 and UE2 through the same radio resource, the conflict issue occurs. To resolve such a hidden node problem, an inter-UE coordination procedure may be required.

Or, the example 1010 on the lower side of FIG. 16 shows that UE1 may transmit sidelink data to UE3, and UE3 may transmit sidelink data to UE2. In this case, when UE1 and UE3 select the same sidelink radio resource, UE3 may be unable to receive the data from UE1 due to conflict. To address such a half-duplex problem, an inter-UE coordination procedure may be needed.

As such, if an inter-UE coordination procedure is needed, the reception UE enables transmission/reception of inter-UE coordination information. In this case, according to an example, the reception UE and the transmission UE are presumed to support use of inter-UE coordination information.

The types of coordination information include a first type including the preferred resource set or non-preferred resource set for the transmission UE and a second type including resource conflict information about the transmission UE. In the disclosure, the coordination information is presumed to be of the first type.

The transmission UE may transmit explicit reporting request information, for requesting coordination information, to the reception UE. According to an embodiment, the reporting request information is included and received in sidelink control information. Upon receiving the reporting request information from the transmission UE, the reception UE may determine that a transmission trigger condition is met and configure first-type coordination information. In this case, the first-type coordination information may include at least one preferred resource set or non-preferred resource set.

According to an embodiment, the coordination information including the preferred resource set or non-preferred resource set is configured based on the RSRP value for another transmission UE identified by the reception UE. The reception UE may select preferred resource set information based on sidelink reserved resource information of the other transmission UE. Specifically, at least one selected radio resource included in the preferred resource set information may be configured to exclude the sidelink reserved resource information having an RSRP measurement value larger than a preset threshold from the sidelink reserved resource information reserved by at least one other transmission UE.

The reception UE may measure the RSRP for each of at least one radio resource included in the sidelink reserved resource information received from at least one other transmission UE. The reception UE compares the RSRP value measured for each of at least one radio resource with a preset RSRP threshold. Thereafter, the reception UE configures the coordination information so that among the reserved resources of the other transmission UE, reserved resources exceeding the threshold are not included in the preferred resource set information. It is because the likelihood of conflict is low if the measured RSRP is less than a predetermined level, although the radio resources overlap with another transmission UE. That is, if the measured RSRP is less than a predetermined level, ther is a small chance to occur conflict problem due to the distance or blockage although the radio resources overlap with the other transmission UE.

Or, the reception UE may select non-preferred resource set information based on sidelink reserved resource information of another transmission UE. Specifically, the non-preferred resource set information may include sidelink reserved resource information reserved by at least one other transmission UE, received by the reception UE, and at least one radio resource determined based on the RSRP measurement value measured by the reception UE. For example, the non-preferred resource set information may be determined based on the RSRP measurement value about at least one radio resource included in the sidelink reserved resource information reserved by another transmission UE.

Similar to the preferred resource set information, the reception UE may configure radio resources having a predetermined level or more of RSRP measurement value as coordination information. Or, the reception UE may include all of the radio resources having the predetermined level or more of RSRP measurement value measured by the reception UE and the reserved resource reserved by another transmission UE, in the non-preferred resource set information.

According to an embodiment, the coordination information indicating at least one preferred resource set or at least one non-preferred resource set may be constituted of two-dimensional (2D) bitmap configuration information of the time axis and the frequency axis. To that end, a reference sidelink resource may be divided into M (on the frequency axis) and N (on the time axis) resource units in the form of a lattice. For such reference sidelink resource, it may be indicated whether each resource unit for the reference sidelink resource is included in the preferred resource set or non-preferred resource set in the form of a bitmap.

In this case, the corresponding reference sidelink resource may be divided into sub-channel units in the frequency domain and into sidelink units in the time domain. In other words, for M sub-channels in one sidelink slot and N consecutive sidelink slots, coordination information indicating the preferred resource set or non-preferred resource set may be transmitted as MxN bitmap information.

According to an embodiment, M is the number of sub-channels constituting the reference sidelink resource, and M may be determined based on the number of sub-channels constituting the sidelink resource pool. Further, N is the number of sidelink slots constituting the reference sidelink resource. Such N may be set to a fixed value or may be set through higher layer signaling. Or, N may be configured to be included in the corresponding coordination information. Or, N may be included and indicated in the SCI format for PSSCH allocation if the coordination information is transmitted through the PSSCH.

Or, the unit configuring the reference sidelink resource may be not the 1 sub-channel x 1 sidelink slot, but m sub-channels x n sidelink units. In this case, the configuration information about the corresponding reference sidelink resource may be transmitted by the base station or UE through higher layer signaling. Or, the configuration information about the reference sidelink resource may be included in the configuration information about the resource pool. Or, the configuration information about the reference sidelink resource may be included in the corresponding coordination information or, if the coordination information is transmitted through the PSSCH, it may be included and indicated in the SCI format for PSSCH allocation.

According to another embodiment, at least one preferred resource set or at least one non-preferred resource set may be configured based on a time resource indicator value (TRIV) regarding time resource allocation and a frequency resource indicator value (FRIV) regarding frequency resource allocation. In other words, one resource set may be indicated in the form of the TRIV and the FRIV by the time resource allocation field and frequency resource allocation field of the SCI.

According to an embodiment, the coordination information indicating at least one preferred resource set or at least one non-preferred resource set may be received through the MAC CE. In other words, the coordination information may be received through the PSSCH via medium access control control element (MAC CE) signaling or RRC signaling.

Or, according to another embodiment, the coordination information indicating at least one preferred resource set or at least one non-preferred resource set may be received in the 1st SCI format through the PSSCH.

Or, the coordination information indicating at least one preferred resource set or at least one non-preferred resource set may be received in the 2^{nd} SCI format through the PSSCH. In this case, a separate 2^{nd} SCI format may be defined for transmitting the corresponding coordination information, not the existing SCI format. For example, the separate 2^{nd} SCI for transmitting the coordination information may be configured based on the 2^{nd} SCI format 2-C defined for transmission of coordination information. In this case, 2^{nd} SCI format 2-C may include a one-bit field indicating whether the corresponding SCI requests coordination information or transmits the coordination information.

According to an embodiment, the transmission method may be determined based on the number of resource sets indicated. In other words, if the number of radio resources is predetermined N or less, it may be received through the MAC CE or 2^{nd} SCI format. Or, if the number of resource sets is N or more, it may be received only through the MAC CE. For example, N may be set to 3.

Further, according to an embodiment, the timing gap k between the sidelink slot where transmission of the coordination information is performed and the reference sidelink resource may be configured to have a fixed value. Or, k may be determined by the UE's processing capability or be set through higher layer signaling. Or, k may be included in the corresponding coordination information or, if the coordination information is transmitted through the PSSCH, it may be included and indicated in the SCI format for PSSCH allocation.

Referring back to FIG. 14, the transmission UE may configure a sidelink transmission resource used for sidelink transmission to the reception UE based on the coordination information (S1420) or perform sidelink transmission using the sidelink transmission resource (S1430).

The transmission UE may select or reselect a radio resource for sidelink communication based on the received coordination information. According to an embodiment, the transmission UE may select or reselect the sidelink resource based on the sensing result sensed in the sensing window and the coordination information. The sensing window means a time interval for selecting a radio resource by each UE to perform sidelink communication. Each UE selects or reselects a specific radio resource in the resource pool using the radio resource sensing result value sensed in the sensing window. Accordingly, the transmission UE may select or reselect a radio resource using at least one of the preferred resource set or non-preferred resource set information or resource information selected as a result of sensing, included in the received coordination information.

If the coordination information includes the preferred resource set information, the transmission UE may select or reselect, as the sidelink resource, the radio resource jointly included in the resource information and preferred resource set information according to the sensing result. For example, the transmission UE may select or reselect first the resource jointly included in the preferred resource set information included in the coordination information and the resource information according to the result of sensing before or after the coordination information is received.

Or, if the preferred resource set information is included in the coordination information, the transmission UE may select or reselect the sidelink resource from among the radio resources included in the preferred resource set information. In other words, the transmission UE may select or reselect the sidelink resource only from the radio resources included in the preferred resource set information without using the result of its own sensing.

Or, if the non-preferred resource set information is included in the coordination information, the transmission UE may select or reselect the sidelink resource except for the radio resources included in the non-preferred resource set information among the resource information according to the sensing result. If the resource information according to the result of sensing in the sensing window overlaps the radio resource included in the non-preferred resource set information, the transmission UE may exclude the overlapping resource and select or reselect the radio resource from the remaining resource information according to the sensing result.

The transmission UE may transmit SCI including information for the selected or reselected resource to the reception UE. The transmission UE may perform sidelink communication with the reception UE through the sidelink resource allocated by the SCI.

According to the embodiments, it is possible to perform sidelink communication using coordination information and efficiently use the sidelink transmission resource between UEs upon applying a mode 2-based sidelink resource allocation scheme in NR sidelink communication.

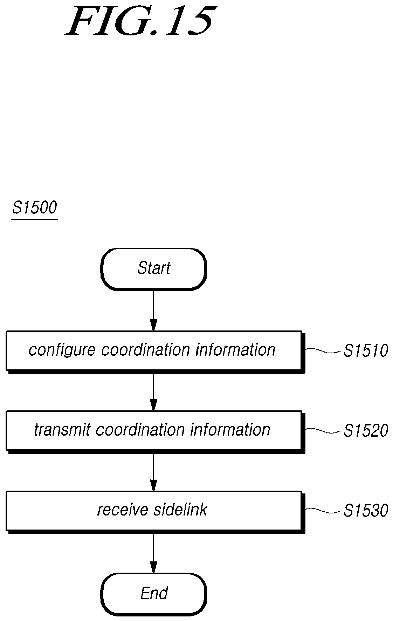

FIG. 15 is a flowchart illustrating a procedure S 1500 for performing sidelink communication using coordination information by a reception UE according to an embodiment. Description of some operation may be omitted if it is similar or already made in connection with FIG. 14 above in order to avoid redundant description.

Referring to FIG. 15, the reception UE may configure coordination information indicating at least one preferred resource set or at least one non-preferred resource set for the transmission UE (S1510).

If an inter-UE coordination procedure is needed, the transmission UE may enable transmission/reception of inter-UE coordination information. In this case, according to an embodiment, the reception UE and the transmission UE are presumed to support use of inter-UE coordination information.

The reception UE may receive explicit reporting request information, for requesting coordination information, from the transmission UE. According to an embodiment, the reporting request information may be included and received in sidelink control information. Upon receiving the reporting request information from the transmission UE, the reception UE may determine that a transmission trigger condition is met and configure first-type coordination information. In this case, the first-type coordination information may include at least one preferred resource set or non-preferred resource set.

According to an embodiment, the coordination information including the preferred resource set or non-preferred resource set may be configured based on the RSRP value for another transmission UE identified by the reception UE. The reception UE may select preferred resource set information based on sidelink reserved resource information of another transmission UE. Specifically, at least one selected radio resource included in the preferred resource set information may be configured to exclude the sidelink reserved resource information having an RSRP measurement value larger than a preset threshold from the sidelink reserved resource information reserved by at least one other transmission UE.

The reception UE may measure the RSRP for each of at least one radio resource included in the sidelink reserved resource information received from at least one other transmission UE. The reception UE compares the RSRP value measured for each of at least one radio resource and a preset RSRP threshold. Thereafter, the reception UE configures the coordination information so that among the reserved resources of another transmission UE, reserved resources exceeding the threshold are not included in the preferred resource set information. It is because the likelihood of conflict is low if the measured RSRP is less than a predetermined level, although the radio resources overlap with another transmission UE. That is, if the measured RSRP is less than a predetermined level, there is a small chance to occur conflict problem due to the distance or blockage although the radio resources overlap with the other transmission UE

Or, the reception UE may select non-preferred resource set information based on sidelink reserved resource information of another transmission UE. Specifically, the non-preferred resource set information may include sidelink reserved resource information reserved by at least one other transmission UE, received by the reception UE, and at least one radio resource determined based on the RSRP measurement value measured by the reception UE. For example, the non-preferred resource set information may be determined based on the RSRP measurement value about at least one radio resource included in the sidelink reserved resource information reserved by another transmission UE.

Similar to the preferred resource set information, the reception UE may configure radio resources having a predetermined level or more of RSRP measurement value as coordination information. Or, the reception UE may include all of the radio resources having the predetermined level or more of RSRP measurement value measured by the reception UE and the reserved resource reserved by the other transmission UE, in the non-preferred resource set information.

According to an embodiment, the coordination information indicating at least one preferred resource set or at least one non-preferred resource set may be constituted of two-dimensional (2D) bitmap configuration information of the time axis and the frequency axis. To that end, a reference sidelink resource may be divided into M (on the frequency axis) and N (on the time axis) resource units in the form of a lattice. For such reference sidelink resource, it may be indicated whether each resource unit for the reference sidelink resource is included in the preferred resource set or non-preferred resource set in the form of a bitmap.

In this case, the corresponding reference sidelink resource may be divided into sub-channel units in the frequency domain and into sidelink units in the time domain. In other words, for M sub-channels in one sidelink slot and N consecutive sidelink slots, coordination information indicating the preferred resource set or non-preferred resource set may be transmitted as MxN bitmap information.

According to an embodiment, M is the number of sub-channels constituting the reference sidelink resource, and M may be determined based on the number of sub-channels constituting the sidelink resource pool. Further, N is the number of sidelink slots constituting the reference sidelink resource. Such N may be set to a fixed value or may be set through higher layer signaling. Or, N may be configured to be included in the corresponding coordination information. Or, N may be included and indicated in the SCI format for PSSCH allocation if the coordination information is transmitted through the PSSCH.

Or, the unit configuring the reference sidelink resource may be not the 1 sub-channel x 1 sidelink slot, but m sub-channels x n sidelink units. In this case, the configuration information about the corresponding reference sidelink resource may be transmitted by the base station or UE through higher layer signaling. Or, the configuration information about the reference sidelink resource may be included in the configuration information about the resource pool. Or, the configuration information about the reference sidelink resource may be included in the corresponding coordination information or, if the coordination information is transmitted through the PSSCH, it may be included and indicated in the SCI format for PSSCH allocation.

According to another embodiment, at least one preferred resource set or at least one non-preferred resource set may be configured based on a time resource indicator value (TRIV) regarding time resource allocation and a frequency resource indicator value (FRIV) regarding frequency resource allocation. In other words, one resource set may be indicated in the form of the TRIV and the FRIV by the time resource allocation field and frequency resource allocation field of the SCI.

Referring back to FIG. 15, the reception UE may transmit the coordination information to the transmission UE (S1520).

According to an embodiment, the coordination information indicating at least one preferred resource set or at least one non-preferred resource set may be transmitted through the MAC CE. In other words, the coordination information may be transmitted through the PSSCH via medium access control control element (MAC CE) signaling or RRC signaling.

Or, according to another embodiment, the coordination information indicating at least one preferred resource set or at least one non-preferred resource set may be transmitted in the 1^{st} SCI format through the PSSCH.

Or, the coordination information indicating at least one preferred resource set or at least one non-preferred resource set may be transmitted in the 2^{nd} SCI format through the PSSCH. In this case, a separate 2^{nd} SCI format may be defined for transmission of the corresponding coordination information, not the existing SCI format. For example, the separate 2^{nd} SCI for transmission of the coordination information may be configured based on the 2nd SCI format 2-C defined for transmission of coordination information. In this case, 2nd SCI format 2-C may include a one-bit field indicating whether the corresponding SCI requests coordination information or transmits the coordination information.

According to an embodiment, the transmission method may be determined based on the number of resource sets indicated. In other words, if the number of radio resources is predetermined N or less, it may be transmitted through the MAC CE or 2nd SCI format. Or, if the number of resource sets is N or more, it may be transmitted only through the MAC CE. For example, N may be set to 3.

Further, according to an embodiment, the timing gap k between the sidelink slot where transmission of the coordination information is performed and the reference sidelink resource may be configured to have a fixed value. Or, k may be determined by the UE's processing capability or be set through higher layer signaling. Or, k may be included in the corresponding coordination information or, if the coordination information is transmitted through the PSSCH, it may be included and indicated in the SCI format for PSSCH allocation.

Referring back to FIG. 15, the reception UE may perform sidelink reception based on the sidelink transmission resource configured based on the coordination information (S1530).

The transmission UE may select or reselect a radio resource for sidelink communication based on the received coordination information. According to an embodiment, the transmission UE may select or reselect the sidelink resource based on the sensing result sensed in the sensing window and the coordination information. Accordingly, the transmission UE may select or reselect a radio resource using at least one of the preferred resource set or non-preferred resource set information or resource information selected as a result of sensing, included in the received coordination information.

If the coordination information includes the preferred resource set information, the transmission UE may select or reselect, as the sidelink resource, the radio resource jointly included in the resource information and preferred resource set information according to the sensing result. For example, the transmission UE may select or reselect first the resource jointly included in the preferred resource set information included in the coordination information and the resource information according to the result of sensing before or after the coordination information is received.

Or, if the preferred resource set information is included in the coordination information, the transmission UE may select or reselect the sidelink resource from among the radio resources included in the preferred resource set information. In other words, the transmission UE may select or reselect the sidelink resource only from among the radio resources included in the preferred resource set information without using the result of its own sensing.

Or, if the non-preferred resource set information is included in the coordination information, the transmission UE may select or reselect the sidelink resource except for the radio resources included in the non-preferred resource set information among the resource information according to the sensing result. If the resource information according to the result of sensing in the sensing window overlaps the radio resource included in the non-preferred resource set information, the transmission UE may exclude the overlapping resource and select or reselect the radio resource from the remaining resource information according to the sensing result.

The reception UE may receive SCI including information for the resource selected or reselected by the transmission UE. The reception UE may perform sidelink communication with the transmission UE through the sidelink resource allocated by the SCI.

According to the embodiment, it is possible to perform sidelink communication using coordination information and efficiently use the sidelink transmission resource between UEs upon applying a mode 2-based sidelink resource allocation scheme in NR sidelink communication.

Hereinafter, each embodiment related to transmission/reception of coordination information for sidelink communication in NR will be described in detail with reference to related drawings.

A mode 2-based legacy SRS radio resource allocation method is a radio resource allocation scheme of a type in which a sidelink transmission UE (sidelink Tx UE) selects a radio resource for sidelink transmission on its own based on the result of channel sensing. In other words, a Tx UE is defined to select a time resource (e.g., sidelink slot) and frequency resource (e.g., sub-channel(s)) for transmitting the PSCCH and PSSCH to a reception UE(s) (Rx UE(s)) based on the result of channel sensing in the corresponding Tx UE.

However, the sidelink radio resource selected based only on the sensing result in the Tx UE may be a radio resource that causes server interference in the position of the Rx UE receiving sidelink transmission from the corresponding Tx UE. In other words, due to the hidden node problem, the Tx UE may perform sidelink transmission through the radio resource with severe interference in the position of the Rx UE, which may degrade the performance in terms of reliability and latency for sidelink transmission/reception.

Therefore, as a method for addressing this, the disclosure introduces a method for configuring assistance information for selecting a sidelink radio resource between UEs upon applying a mode 2-based sidelink resource allocation method and transmitting the same.

As assistance information transmitted from a sidelink reception UE (Rx UE) to the sidelink transmission UE (Tx UE), there may be information about a "set of resources." The set of resources may be preferred resource information configured based on, e.g., the sensing result in the Rx UE. Or, the set of resources may be non-preferred radio resource information configured based on, e.g., the sensing result in the Rx UE. Or, as the assistance information, there may be indication information about the sidelink resource conflict. The resource conflict information may be pre-conflict indication information about a reserved resource or post-conflict indication information about sidelink transmission that has already occurred.

If such various forms/types of assistance information are defined, the Rx UE needs to define what form/type of assistance information is to be transmitted to the Tx UE or a third UE or base station. In other words, there is proposed a method for determining the format/type or form of the assistance information to be transmitted from a UE if one or more formats/types of, or forms of, assistance information are defined.

### Embodiment 1: Capability and enabling/disabling of assistance information

It may be defined to transmit whether to support the above-described assistance information for each UE to the base station and between UEs through capability signaling. Specifically, the capability information may be information related to whether to support transmission for the assistance information, whether to support reception for the assistance information, or the type/format of the assistance information supported.

Whether to support transmission/reception of the assistance information for PSSCH transmission/reception or according to PSSCH transmission/reception between UEs supporting transmission/reception of a assistance information may be enabled or disabled. According to an embodiment, based on the cast type of PSSCH transmission, it may be determined whether to support the assistance information or whether to enable/disable, whether to support the assistance information or whether to enable/disable. For example, in the case of broadcast, it may be defined not to support assistance information, i.e., to disable transmission of assistance information and, in the case of groupcast or unicast, it may be defined to enable assistance information. As another example, it may be defined to disable transmission/reception of assistance information for broadcast/groupcast while enabling assistance information only for unicast.

According to another embodiment, based on explicit signaling, it may be determined whether to support assistance information or whether to enable/disable. For example, whether to support transmission/reception of assistance information or whether to enable/disable may be set through RRC signaling or the enabling/disabling about the assistance information may be indicated through the sidelink control information format (SCI format). Or, whether to support assistance information or whether to enable/disable may be implicitly indicated. For example, a specific 1st-stage SCI format may be used for enabling assistance information, or a specific 2nd-stage SCI format may be used for enabling assistance information.

According to still another embodiment, whether to support assistance information or whether to enable/disable may be set for each sidelink cluster/coverage constituting the mode 2-based sidelink transmission/reception. For example, it may be defined to include and transmit information about whether to support assistance information or whether to enable/disable through the physical sidelink broadcast channel (PSBCH) transmitted from the synch, source node constituting a sidelink cluster/coverage. Or, it may be defined to implicitly include information about whether to support assistance information or whether to enable/disable upon transmission of the sidelink synchronization signal (S-SS).

According to yet another embodiment, whether to support assistance information or whether to enable/disable may be set based on, e.g., inter-UE location information, and zone ID information based on geodesic distance. Or, whether to support assistance information or whether to enable/disable may be set according to inter-UE sidelink CSI information. As such, if it is determined whether to enable/disable according to the location information or inter-UE sidelink CSI information, a threshold value which serves as a reference value of the enabling/disabling may be set/indicated through RRC signaling or L1 control signaling (e.g., PDCCH or PSCCH) from the base station/network or UE.

Additionally, whether to support assistance information or whether to enable/disable may be achieved through a combination of two or more of the above-described examples. For example, whether to support assistance information may be determined according to the cast type and, additionally, whether to enable/disable the assistance information may be determined through the above-described explicit signaling (e.g., RRC signaling or SCI format transmission) for the cast type in which the assistance information is supported.

### Embodiment 2: Determination of the type/format of assistance information

If transmission/reception of assistance information is performed between UEs by the above-described scheme of embodiment 1 or another scheme, it is necessary to determine the type/format of the assistance information. This embodiment 2 is a method for determining the assistance information type/format for transmitting and receiving assistance information.

### Determination by cast type

It may be defined to determine the type/format(s) of assistance information per cast type. In other words, the type/format of the assistance information about the corresponding Rx UE may be determined by the cast type of the PSSCH received by a Rx UE. In other words, as an example, it may be defined that in the case of broadcast, assistance information, as indication information about resource conflict, may be configured and transmitted and, in the case of groupcast, a non-preferred resource set may be configured and transmitted in configuring a set of resources. In the case of unicast, a preferred resource set may be configured and transmitted. However, this is only an example, and the embodiments are not limited thereto. Any case where the assistance information type/format is determined by the cast type may be included in the category of the disclosure.

### Determination by explicit or implicit signaling

A UE or base station may set or indicate an assistance information type/format.

For example, the source node constituting a sidelink cluster may transmit type/format configuration information about the assistance information to be transmitted/received to/from the sidelink UEs in the cluster through the S-SS or PSBCH. Or, the base station configuring a cell may set an assistance information format/type for mode 2-based UEs of sidelink UEs in the corresponding cell and transmit the same through cell-specific/UE-specific RRC signaling or L1 control signaling. Or, a Tx UE may transmit assistance information type/format configuration information through PCS RRC signaling. Or, it may be defined to include assistance information type/format indication information in the SCI format and transmit the same through the PSCCH.

Or, assistance information type/format information may be implicitly indicated. For example, to indicate assistance information type/format, a specific 1st-stage SCI format or a specific 2nd-stage SCI format may be used.

### Define triggering conditions for each assistance information type/format

It may be defined to define a separate trigger ing condition for each assistance information type/format as described above and to transmit the assistance information type/format if the triggering condition is met. As the triggering condition, sidelink CSI information, location information (e.g., zone ID), whether there is a resource conflict as to the sidelink resource where PSSCH transmission is performed in the Tx UE or the reserved sidelink resource for PSSCH transmission, or the interference level for the sidelink resource may be used.

For example, if the Rx UE detects a resource conflict in which different Tx UE PSSCH transmission resources fully or partially overlap according to PSCCH reception information, the assistance information may be indication information about the resource conflict. Or, if the interference level in the reserved radio resource or radio resource where PSSCH transmission is performed in the Tx UE is higher than a specific threshold, the assistance information may be preferred resource set configuration information or non-preferred resource set configuration information.

Additionally, any case where the assistance information type/format is determined in the form of all combinations of the above-described schemes may be included in the category of the disclosure.

The disclosure also proposes a reporting procedure for each assistance information type/format described above.

### Embodiment 3. Reporting procedure for each assistance information type/format

In defining a reporting procedure for assistance information, assistance information constituted of preferred or non-preferred radio resource set information and assistance information for indicating a resource conflict may be first distinguished from each other among the above-described pieces of assistance information, and a reporting procedure may be separately defined.

In other words, in configuring and transmitting/receiving assistance information in a UE, assistance information constituted of a preferred or non-preferred sidelink radio resource may be defined as type-1 assistance information. On the other hand, assistance information constituted of resource conflict indication information about the sidelink radio resource allocated for PSSCH transmission in a Tx UE (e.g., the radio resource reserved or allocated for PSSCH transmission by a SCI format transmission) or high-interference indication information for the purpose of interference avoidance may be defined separately as type-2 assistance information.

In other words, the sidelink assistance information may be divided into i) type-1 assistance information constituted of recommended resource set information for sidelink transmission and ii) type-2 assistance information constituted of resource conflict indication or resource reselection indication/request information according thereto.

As such, if multi-type assistance information is defined, a separate reporting procedure may be defined for each assistance information type.

According to an embodiment, the type of assistance information supported according to the sidelink cast type may be limited. For example, the type-1 assistance information may be defined to be applied to all cast types while the type-2 assistance information may be defined to be applied only to groupcast and unicast.

In other words, a table defining the cast type supported per assistance information type may be defined as in Table 2 below. However, Table 2 below is an example mapping table for the cast type supported per assistance information type and, without limited thereto, all combinations in which other per-assistance information type cast type mapping tables are configured may be included in the category of the disclosure.

**[Table 2]**

| Assistance information type | Supported cast type |
|---|---|
| Type-1 assistance information | Broadcast, groupcast, unicast |
| Type-2 assistance information | unicast |

According to another embodiment, a reporting channel for assistance information may be defined per assistance information type. For example, the above-described type-1 assistance information may be defined to be transmitted through the PSCCH or PSSCH. In contrast, the above-described type-2 assistance information may be defined to be transmitted through the PSFCH. This is only an example and vice versa. The embodiments are not limited thereto.

According to another embodiment, a separate trigger procedure may be defined per assistance information type. For example, the type-1 assistance information may be triggered through higher layer signaling or be triggered or enabled through the SCI format.

### Embodiment 4. Reporting, triggering procedure for assistance information

The reporting, triggering procedure for assistance information may also be applied separately according to assistance information. According to an embodiment, the above-described type-1 assistance information may be defined to be set through higher layer signaling and periodically reported or to be additionally reported when an information modification is needed after initial reporting. In other words, if type-1 assistance information reporting is set for a UE, the UE may configure a preferred resource set or non-preferred resource set and transmit it through the PSCCH or PSSCH with a periodicity, and the periodicity information may be set through higher layer signaling.

Or, if type-1 assistance information reporting is set for a UE, the UE configures preferred resource set or non-preferred resource set information and performs initial assistance information reporting. Thereafter, it may be defined to modify and report the preferred resource set or non-preferred resource set configuration information based on changed information only when the change is made to the preferred resource set or non-preferred resource set configuration information.

Or, reporting of the type-1 assistance information may be requested by the SCI transmitted by a Tx UE. In other words, a SCI format may be defined to include indication information for requesting the corresponding assistance information, i.e., assistance information request indication information. In this case, it may be defined for a Rx UE to configure and report type-1 assistance information based on the corresponding indication information. In this case, whether the corresponding assistance information request indication information is included may be set by RRC signaling, and a separate SCI format including the same may be defined.

On the other hand, for type-2 assistance information, triggering/request information may be indicated per SCI where PSSCH transmission allocation is performed. In other words, the type-2 assistance information is conflict indication information about a transmitted PSSCH or reserved PSSCH and may be reported through the PSFCH or PSCCH. Accordingly, upon SCI transmission when the corresponding PSSCH transmission allocation is performed, the Tx UE may be rendered to include and transmit request indication information about the corresponding assistance information. In this case, whether the corresponding assistance information request indication information is included may be set by RRC signaling, and a separate SCI format including the same may be defined. Further, additionally, the type-2 assistance information may be defined to be supported only when the HARQ operation is enabled. In other words, it may be defined that if HARQ reporting is disabled for a Rx UE, the Rx UE does not expect a request/trigger for the type-2 assistance information reporting.

Additionally, in applying the reporting procedure for each assistance information type as suggested in the disclosure, all combinations of the above-described reporting procedures and assistance information types may be included in the category of the disclosure.

### Embodiment 5. Configuration and transmission of inter-UE coordination information of scheme 1

If such various formats/types of assistance information are defined, it is needed to define a specific transmission method for assistance information for each type.

In the disclosure, three types of assistance information are configured for sidelink transmission of the transmission UE (UE-B) by a reception UE (UE-A) upon such mode 2-based resource allocation.

Type A: For example, when the reception UE transmits a preferred resource set to the transmission UE for transmission UE's transmission based on the sensing result.

Type B: For example, when the reception UE transmits a non-preferred resource set to the transmission UE for the transmission UE's transmission based on the sensing result and/or expected/potential resource conflict.

Type C: When the reception UE transmits a resource set where a resource conflict has been detected to the transmission UE.

The disclosure introduces a method for configuring and transmitting type A or type B assistance information.

Hereinafter, a method for configuring and transmitting type A assistance information (e.g., a method for a UE-A to configure a preferred resource set and transmit it to UE-B) will be described. However, the following description is likewise applicable to the type B assistance information transmission method. In other words, it is apparent that the same method is applicable even where a UE-A configures a non-preferred resource set and transmits it to UE-B.

As described above, type A assistance information allows a UE-A to configure a preferred resource set and transmit it to UE-B.

As a method for configuring and transmitting type A assistance information, the corresponding preferred resource set may be two-dimensional bitmap configuration information of time axis and frequency axis. In other words, a reference sidelink resource for configuring a preferred resource set may be divided into M (on the frequency axis) and N (on the time axis) resource units in the form of a lattice. In this case, it may be defined to indicate whether each resource unit for the reference sidelink resource is included, in the bitmap form, in the preferred resource set.

According to an embodiment, a reference sidelink resource may be divided into subchannel units on the frequency axis and be divided into sidelink slot units on the time axis, configuring MxN resource units. In other words, the corresponding resource set configuration information may be transmitted as MxN bitmap information, where M denotes the number of sub-channels constituting one logical sidelink slot, and N denotes the number of consecutive logical sidelink slots on the time axis.

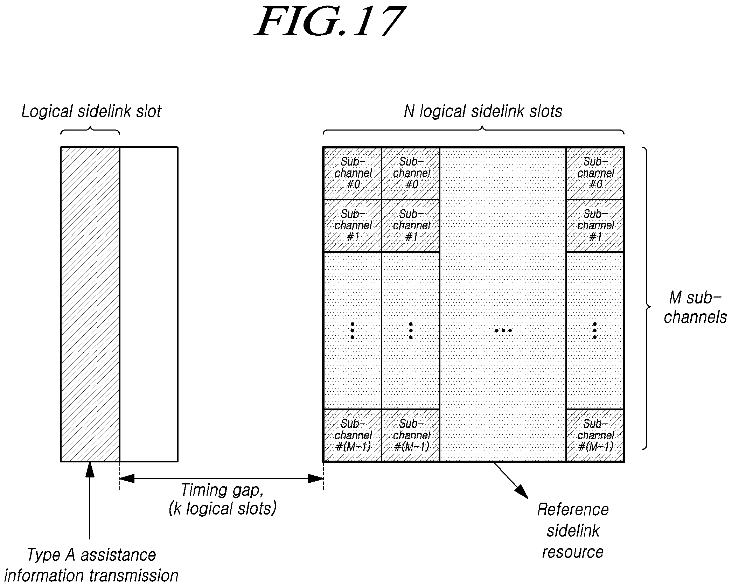

In other words, a reference sidelink resource constituted of MxN time/frequency resources for configuring a preferred resource set may be configured as shown in FIG. 17. In this case, for the MxN reference sidelink resource, preferred resource set information in the form of bitmap may be configured and transmitted.

In this case, according to an example, the timing gap k between the sidelink slot where the type A assistance information transmission is performed and the reference sidelink resource may be configured to have a fixed value. Or, k may be determined by the UE's processing capability or be set through higher layer signaling. Or, k may be included in the corresponding type A assistance information or, if the type A assistance information is transmitted through the PSSCH, it may be included and indicated in the SCI format for PSSCH allocation.

M is the number of sub-channels constituting the corresponding reference sidelink resource, and M may be determined by the number of sub-channels constituting the resource pool.

N is the number of logical sidelink slots constituting the corresponding reference sidelink resource, and N may be configured to have a fixed value. Alternatively, N may be set through higher layer signaling. Or, N may be included in the corresponding type A assistance information or, if the type A assistance information is transmitted through the PSSCH, it may be included and indicated in the SCI format for PSSCH allocation.

Or, the time/frequency unit for constituting the reference sidelink resource may be not the 1 subchannel x 1 logical sidelink slot unit as shown in FIG. 17 but the m subchannels x n logical slots unit. In this case, the reference sidelink resource configuration information may be configured and transmitted by the base station or UE through higher layer signaling. Or, the reference sidelink resource configuration information may be included in the resource pool configuration information. Or, the reference sidelink resource configuration information may be included in the corresponding type A assistance information or, if the type A assistance information is transmitted through the PSSCH, it may be included and indicated in the SCI format for PSSCH allocation.

As another method for configuring and transmitting the type A assistance information, it may be defined to configure a preferred resource set in the same method as the frequency resource assignment and time resource assignment of SCI format 1-A. In other words, one resource set may be configured through the time resource indicator value (TRIV) regarding time resource allocation and the frequency resource indicator value (FRIV) regarding frequency resource allocation.

The type A assistance information may be transmitted through the PSSCH via medium access control control element (MAC CE) signaling or RRC signaling. Or, the type A assistance information may be transmitted through the PSSCH via the 1-stage SCI (1st SCI) format or through the PSSCH via the 2-stage SCI (2nd SCI) format. In particular, if the type A assistance information is transmitted through the 2-stage SCI format, a separate 2-stage SCI format for transmission of the assistance information, from the existing SCI format, may be defined. For example, SCI format 2-C may be defined for assistance information.

One or more preferred resource sets may be transmitted through type A assistance information. In this case, a preference level or a non-preference level or an interference level may be defined for each resource set and be transmitted through the corresponding assistance information.

Or, if one or more resource sets are configured and transmitted through assistance information, the number of resource sets may be included and transmitted in the corresponding assistance information. Or, if the assistance information is transmitted through the PSSCH, the number of resource sets may be indicated through the SCI format where the PSSCH resource allocation for the corresponding assistance information is performed.

Hereinafter, hardware and software configurations of a receiving UE and a transmitting UE which may perform all or some of the embodiments described above in connection with FIGS. 1 to 17 will be described with reference to the accompanying drawings. Description of some elements may be omitted to avoid redundant description if they are similar to or already described above.

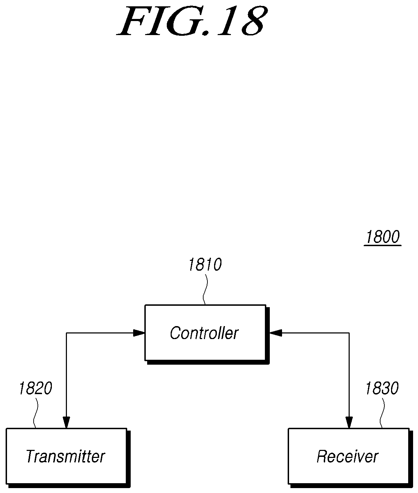

FIG. 18 is a block diagram illustrating a transmission UE 1800 according to an embodiment.

Referring to FIG. 18, according to an embodiment, a transmission UE 1800 includes a controller 1810, a transmitter 1820, and a receiver 1830.

The controller 1810 controls the overall operation of the transmission UE 1800 according to the method for performing sidelink communication using coordination information required to perform the above-described disclosure. The transmitter 1820 transmits uplink control information and data and messages to the base station through a corresponding channel and transmits sidelink control information and data and messages to the transmission UE or sidelink scheduling UE through a corresponding channel. The receiver 1830 receives downlink control information and data and messages from the base station through a corresponding channel and receives sidelink control information and data and messages from the transmission UE or sidelink scheduling UE through a corresponding channel.

The receiver 1830 of the transmission UE may receive, from the reception UE, coordination information indicating at least one preferred resource set or at least one non-preferred resource set. The types of coordination information may include a first type including the preferred resource set or non-preferred resource set for the transmission UE and a second type including resource conflict information about the transmission UE. In the disclosure, the coordination information is presumed to be of the first type.

The transmitter 1820 may transmit explicit reporting request information, for requesting coordination information, to the reception UE. According to an embodiment, the reporting request information may be included and received in sidelink control information. Upon receiving the reporting request information from the transmission UE, the reception UE may determine that a transmission trigger condition is met and configure first-type coordination information. In this case, the first-type coordination information may include at least one preferred resource set or non-preferred resource set.

According to an embodiment, the coordination information including the preferred resource set or non-preferred resource set may be configured based on the RSRP value for another transmission UE identified by the reception UE. The reception UE may select preferred resource set information based on sidelink reserved resource information of another transmission UE. Specifically, at least one selected radio resource included in the preferred resource set information may be configured to exclude the sidelink reserved resource information having an RSRP measurement value larger than a preset threshold from the sidelink reserved resource information reserved by at least one other transmission UE.

Or, the reception UE may select non-preferred resource set information based on sidelink reserved resource information of the other transmission UE. Specifically, the non-preferred resource set information may include sidelink reserved resource information reserved by at least one other transmission UE, received by the reception UE, and at least one radio resource determined based on the RSRP measurement value measured by the reception UE. For example, the non-preferred resource set information may be determined based on the RSRP measurement value about at least one radio resource included in the sidelink reserved resource information reserved by the other transmission UE.

According to an example, the coordination information indicating at least one preferred resource set or at least one non-preferred resource set may be constituted of two-dimensional (2D) bitmap configuration information of the time axis and the frequency axis. To that end, a reference sidelink resource may be divided into M (on the frequency axis) and N (on the time axis) resource units in the form of a lattice. For such reference sidelink resource, it may be indicated whether each resource unit for the reference sidelink resource is included in the preferred resource set or non-preferred resource set in the form of a bitmap.

In this case, the corresponding reference sidelink resource may be divided into subchannel units in the frequency domain and into sidelink units in the time domain. In other words, for M sub-channels in one sidelink slot and N consecutive sidelink slots, coordination information indicating the preferred resource set or non-preferred resource set may be transmitted as MxN bitmap information.

According to an embodiment, M is the number of sub-channels constituting the reference sidelink resource, and M may be determined based on the number of sub-channels constituting the sidelink resource pool. Further, N is the number of sidelink slots constituting the reference sidelink resource, and N may be set to a fixed value or may be set through higher layer signaling. Or, N may be configured to be included in the corresponding coordination information. Or, N may be included and indicated in the SCI format for PSSCH allocation if the coordination information is transmitted through the PSSCH.

According to another embodiment, at least one preferred resource set or at least one non-preferred resource set may be configured based on a time resource indicator value (TRIV) regarding time resource allocation and a frequency resource indicator value (FRIV) regarding frequency resource allocation. In other words, one resource set may be indicated in the form of the TRIV and the FRIV by the time resource allocation field and frequency resource allocation field of the SCI.

According to an embodiment, the receiver 1830 may receive the coordination information indicating at least one preferred resource set or at least one non-preferred resource set through the MAC CE. In other words, the coordination information may be transmitted through the PSSCH via medium access control control element (MAC CE) signaling or RRC signaling.

Or, according to another embodiment, the receiver 1830 may receive the coordination information indicating at least one preferred resource set or at least one non-preferred resource set, in the 1st SCI format through the PSSCH.

Or, the receiver 1830 may receive the coordination information indicating at least one preferred resource set or at least one non-preferred resource set, in the 2nd SCI format through the PSSCH. In this case, a separate 2nd SCI format may be defined for transmission of the corresponding coordination information, not the existing SCI format. For example, the separate 2nd SCI for transmission of the coordination information may be configured based on the 2nd SCI format 2-C defined for transmission of coordination information. In this case, 2nd SCI format 2-C may include a one-bit field indicating whether the corresponding SCI requests coordination information or transmits the coordination information.

According to an embodiment, the transmission method may be determined based on the number of resource sets indicated. In other words, if the number of radio resources is predetermined N or less, it may be transmitted through the MAC CE or 2nd SCI format. Or, if the number of resource sets is N or more, it may be transmitted only through the MAC CE. For example, N may be set to 3.

The controller 1810 may control the transmitter 1820 and the receiver 1830 to configure a sidelink transmission resource used for sidelink transmission to the reception UE based on the coordination information and perform sidelink transmission using the sidelink transmission resource.

The controller 1810 may select or reselect a radio resource for sidelink communication based on the received coordination information. According to an embodiment, the controller 1810 may select or reselect the sidelink resource based on the sensing result sensed in the sensing window and the coordination information. The controller 1810 may select or reselect a radio resource using at least one of the preferred resource set or non-preferred resource set information or resource information selected as a result of sensing, included in the received coordination information.

If the coordination information includes the preferred resource set information, the controller 1810 may select or reselect, as the sidelink resource, the radio resource jointly included in the resource information and preferred resource set information according to the sensing result. For example, the controller 1810 may select or reselect first the resource jointly included in the preferred resource set information included in the coordination information and the resource information according to the result of sensing before or after the coordination information is received.

Or, if the preferred resource set information is included in the coordination information, the controller 1810 may select or reselect the sidelink resource from among the radio resources included in the preferred resource set information. In other words, the controller 1810 may select or reselect the sidelink resource only from the radio resources included in the preferred resource set information without using the result of its own sensing.

Or, if the non-preferred resource set information is included in the coordination information, the controller 1810 may select or reselect the sidelink resource except for the radio resources included in the non-preferred resource set information among the resource information according to the sensing result. If the resource information according to the result of sensing in the sensing window overlaps the radio resource included in the non-preferred resource set information, the controller 1810 may exclude the overlapping resource and select or reselect the radio resource from the remaining resource information according to the sensing result.

The transmitter 1820 may transmit SCI including information for the selected or reselected resource to the reception UE. The controller 1810 may control the performing of sidelink communication with the reception UE through the sidelink resource allocated by the SCI.

According to the embodiments, it is possible to perform sidelink communication using coordination information and efficiently use the sidelink transmission resource between UEs upon applying a mode 2-based sidelink resource allocation scheme in NR sidelink communication.

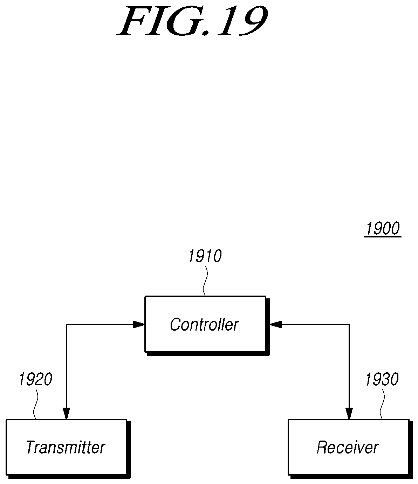

FIG. 19 is a block diagram illustrating a reception UE 1900 according to an embodiment.

Referring to FIG. 19, according to an embodiment, a reception UE 1900 includes a controller 1910, a transmitter 1920, and a receiver 1930.

The controller 1910 controls the overall operation of the reception UE 1900 according to the method for performing sidelink communication using coordination information required to perform the above-described disclosure. The transmitter 1920 transmits uplink control information and data and messages to the base station through a corresponding channel and transmits sidelink control information and data and messages to the reception UE through a corresponding channel. The receiver 1930 receives downlink control information and data and messages from the base station through a corresponding channel and receives sidelink control information and data and messages from the reception UE through a corresponding channel.

The controller 1910 of the reception UE may configure coordination information indicating at least one preferred resource set or at least one non-preferred resource set for the transmission UE. If an inter-UE coordination procedure is needed, the transmission UE may enable transmission/reception of inter-UE coordination information. In this case, according to an example, the reception UE and the transmission UE are presumed to support use of inter-UE coordination information.

The receiver 1930 may receive explicit reporting request information, for requesting coordination information, from the transmission UE. According to an embodiment, the reporting request information may be included and received in sidelink control information. Upon receiving the reporting request information from the transmission UE, the controller 1910 may determine that a transmission trigger condition is met and configure first-type coordination information. In this case, the first-type coordination information may include at least one preferred resource set or non-preferred resource set.

According to an embodiment, the coordination information including the preferred resource set or non-preferred resource set may be configured based on the RSRP value for another transmission UE identified by the reception UE. The controller 1910 may select preferred resource set information based on sidelink reserved resource information of another transmission UE. Specifically, at least one selected radio resource included in the preferred resource set information may be configured to exclude the sidelink reserved resource information having an RSRP measurement value larger than a preset threshold from the sidelink reserved resource information reserved by at least one other transmission UE.

The controller 1910 may measure the RSRP for each of at least one radio resource included in the sidelink reserved resource information received from at least one other transmission UE. The controller 1910 compares the RSRP value measured for each of at least one radio resource with a preset RSRP threshold. Thereafter, the controller 1910 configures the coordination information so that among the reserved resources of the other transmission UE, reserved resources exceeding the threshold are not included in the preferred resource set information. It is because the likelihood of conflict is low if the measured RSRP is less than a predetermined level, although the radio resources overlap with the other transmission UE.

Or, the controller 1910 may select non-preferred resource set information based on sidelink reserved resource information of the other transmission UE. Specifically, the non-preferred resource set information may include sidelink reserved resource information reserved by at least one other transmission UE, received by the reception UE, and at least one radio resource determined based on the RSRP measurement value measured by the reception UE. For example, the non-preferred resource set information may be determined based on the RSRP measurement value about at least one radio resource included in the sidelink reserved resource information reserved by the other transmission UE.

According to an embodiment, the coordination information indicating at least one preferred resource set or at least one non-preferred resource set may be constituted of two-dimensional (2D) bitmap configuration information of the time axis and the frequency axis. To that end, a reference sidelink resource may be divided into M (on the frequency axis) and N (on the time axis) resource units in the form of a lattice. For such reference sidelink resource, it may be indicated whether each resource unit for the reference sidelink resource is included in the preferred resource set or non-preferred resource set in the form of a bitmap.

In this case, the corresponding reference sidelink resource may be divided into subchannel units in the frequency domain and into sidelink units in the time domain. In other words, for M sub-channels in one sidelink slot and N consecutive sidelink slots, coordination information indicating the preferred resource set or non-preferred resource set may be transmitted as MxN bitmap information.

According to an embodiment, M is the number of sub-channels constituting the reference sidelink resource, and M may be determined based on the number of sub-channels constituting the sidelink resource pool. Further, N is the number of sidelink slots constituting the reference sidelink resource. N may be set to a fixed value or may be set through higher layer signaling. Or, N may be configured to be included in the corresponding coordination information. Or, N may be included and indicated in the SCI format for PSSCH allocation if the coordination information is transmitted through the PSSCH.

According to another embodiment, at least one preferred resource set or at least one non-preferred resource set may be configured based on a time resource indicator value (TRIV) regarding time resource allocation and a frequency resource indicator value (FRIV) regarding frequency resource allocation. In other words, one resource set may be indicated in the form of the TRIV and the FRIV by the time resource allocation field and frequency resource allocation field of the SCI.

The transmitter 1920 may transmit the coordination information to the transmission UE. According to an embodiment, the transmitter 1920 may transmit the coordination information indicating at least one preferred resource set or at least one non-preferred resource set through the MAC CE. In other words, the coordination information may be transmitted through the PSSCH via medium access control control element (MAC CE) signaling or RRC signaling.

Or, according to another embodiment, the transmitter 1920 may transmit the coordination information indicating at least one preferred resource set or at least one non-preferred resource set, in the 1st SCI format through the PSSCH.

Or, the transmitter 1920 may transmit the coordination information indicating at least one preferred resource set or at least one non-preferred resource set, in the 2nd SCI format through the PSSCH. In this case, a separate 2nd SCI format may be defined for transmission of the corresponding coordination information, not the existing SCI format. For example, the separate 2nd SCI for transmission of the coordination information may be configured based on the 2nd SCI format 2-C defined for transmission of coordination information. In this case, 2nd SCI format 2-C may include a one-bit field indicating whether the corresponding SCI requests coordination information or transmits the coordination information.

According to an embodiment, the transmission method may be determined based on the number of resource sets indicated. In other words, if the number of radio resources is predetermined N or less, it may be transmitted through the MAC CE or 2nd SCI format. Or, if the number of resource sets is N or more, it may be transmitted only through the MAC CE. For example, N may be set to 3.

The receiver 1930 may receive the sidelink using the sidelink transmission resource configured based on the coordination information.

The transmission UE may select or reselect a radio resource for sidelink communication based on the received coordination information. According to an embodiment, the transmission UE may select or reselect the sidelink resource based on the sensing result sensed in the sensing window and the coordination information. Accordingly, the transmission UE may select or reselect a radio resource using at least one of the preferred resource set or non-preferred resource set information or resource information selected as a result of sensing, included in the received coordination information.

If the coordination information includes the preferred resource set information, the transmission UE may select or reselect, as the sidelink resource, the radio resource jointly included in the resource information and preferred resource set information according to the sensing result. For example, the transmission UE may select or reselect first the resource jointly included in the preferred resource set information included in the coordination information and the resource information according to the result of sensing before or after the coordination information is received.

Or, if the preferred resource set information is included in the coordination information, the transmission UE may select or reselect the sidelink resource from among the radio resources included in the preferred resource set information. In other words, the transmission UE may select or reselect the sidelink resource only from the radio resources included in the preferred resource set information without using the result of its own sensing.

Or, if the non-preferred resource set information is included in the coordination information, the transmission UE may select or reselect the sidelink resource except for the radio resources included in the non-preferred resource set information among the resource information according to the sensing result. If the resource information according to the result of sensing in the sensing window overlaps the radio resource included in the non-preferred resource set information, the transmission UE may exclude the overlapping resource and select or reselect the radio resource from the remaining resource information according to the sensing result.

The receiver 1930 may receive SCI including information for the resource selected or reselected by the transmission UE. The controller 1910 may control the sidelink communication with the transmission UE through the sidelink resource allocated by the SCI.

According to the embodiments, it is possible to perform sidelink communication using coordination information and efficiently use the sidelink transmission resource between UEs upon applying a mode 2-based sidelink resource allocation scheme in NR sidelink communication.

The embodiments described above may be supported by the standard documents disclosed in at least one of the radio access systems such as IEEE 802, 3GPP, and 3GPP2. That is, the steps, configurations, and parts, which have not been described in the present embodiments, may be supported by the above-mentioned standard documents for clarifying the technical concept of the disclosure. In addition, all terms disclosed herein may be described by the standard documents set forth above.

The above-described embodiments may be implemented by any of various means. For example, the present embodiments may be implemented as hardware, firmware, software, or a combination thereof.

In the case of implementation by hardware, the method according to the present embodiments may be implemented as at least one of an application specific integrated circuit (ASIC), a digital signal processor (DSP), a digital signal processing device (DSPD), a programmable logic device (PLD), a field programmable gate array (FPGA), a processor, a controller, a microcontroller, or a microprocessor.

In the case of implementation by firmware or software, the method according to the present embodiments may be implemented in the form of an apparatus, a procedure, or a function for performing the functions or operations described above. Software code may be stored in a memory unit, and may be driven by the processor. The memory unit may be provided inside or outside the processor, and may exchange data with the processor by any of various well-known means.

In addition, the terms "system", "processor", "controller", "component", "module", "interface", "model", "unit", and the like may generally mean computer-related entity hardware, a combination of hardware and software, software, or running software. For example, the above-described components may be, but are not limited to, a process driven by a processor, a processor, a controller, a control processor, an entity, an execution thread, a program and/or a computer. For example, both the application that is running in a controller or a processor and the controller or the processor may be components. One or more components may be provided in a process and/or an execution thread, and the components may be provided in a single device (e.g., a system, a computing device, etc.), or may be distributed over two or more devices.

The above embodiments of the present disclosure have been described only for illustrative purposes. Further, the embodiments of the disclosure are not intended to limit, but are intended to illustrate the technical idea of the disclosure.

## Claims

1. A method (S1400) for performing, by a transmission user equipment, UE, sidelink communication using coordination information, the method comprising:
(S1410) receiving, from a reception UE, the coordination information indicating at least one preferred resource set or at least one non-preferred resource set, at least one radio resource included in the preferred resource set being configured to exclude sidelink reserved resource having an RSRP measurement value larger than a preset threshold from sidelink reserved resource reserved by at least one other transmission UE, at least one radio resource included in the non-preferred resource set being configured to include sidelink reserved resource having the RSRP measurement value larger than the preset threshold from the sidelink reserved resource reserved by the at least one other transmission UE, the sidelink reserved resource being included in a sidelink reserved resource information received by the reception UE from the at least one other transmission UE;
(S1420) configuring a sidelink transmission resource used for sidelink transmission to the reception UE based on the coordination information; and
(S1430) performing the sidelink transmission using the sidelink transmission resource,

2. The method (S1400) of claim 1, wherein the at least one preferred resource set or the at least one non-preferred resource set is configured based on a time resource indicator value, TRIV, regarding time resource allocation and a frequency resource indicator value, FRIV, regarding frequency resource allocation.

3. The method of claim 1, wherein the coordination information indicating the at least one preferred resource set or the at least one non-preferred resource set is received through 2nd sidelink control information, SCI.

4. The method of claim 3, wherein the 2nd SCI is configured based on 2nd SCI format 2-C defined separately from the existing SCI format for transmission of the coordination information.

5. A method (S1500) for performing, by a reception user equipment, UE, sidelink communication using coordination information, the method comprising:
(S1510) configuring the coordination information indicating at least one preferred resource set or at least one non-preferred resource set for a transmission UE, at least one radio resource included in the preferred resource set being configured to exclude sidelink reserved resource having an RSRP measurement value larger than a preset threshold from sidelink reserved resource reserved by at least one other transmission UE, at least one radio resource included in the non-preferred resource set being configured to include sidelink reserved resource having the RSRP measurement value larger than the preset threshold from the sidelink reserved resource reserved by the at least one other transmission UE, the sidelink reserved resource being included in a sidelink reserved resource information received by the reception UE from the at least one other transmission UE;
(S1520) transmitting the coordination information to the transmission UE; and
(S1530) performing sidelink reception using a sidelink transmission resource configured based on the coordination information,

6. The method (S1500) of claim 5, wherein the at least one preferred resource set or the at least one non-preferred resource set is configured based on a time resource indicator value, TRIV regarding time resource allocation and a frequency resource indicator value, FRIV, regarding frequency resource allocation.

7. The method of claim 5, wherein the coordination information indicating the at least one preferred resource set or the at least one non-preferred resource set is transmitted through 2nd sidelink control information, SCI.

8. The method of claim 7, wherein the 2nd SCI is configured based on 2nd SCI format 2-C defined for transmission of the coordination information.

9. A transmission user equipment, UE (1800), performing sidelink communication using coordination information, comprising:
a receiver (1830) configured to receive, from a reception UE, the coordination information indicating at least one preferred resource set or at least one non-preferred resource set, at least one radio resource included in the preferred resource set being configured to exclude sidelink reserved resource having an RSRP measurement value larger than a preset threshold from sidelink reserved resource reserved by at least one other transmission UE, at least one radio resource included in the non-preferred resource set being configured to include sidelink reserved resource having the RSRP measurement value larger than the preset threshold from the sidelink reserved resource reserved by the at least one other transmission UE, the sidelink reserved resource being included in a sidelink reserved resource information received by the reception UE from the at least one other transmission UE;
a controller (1810) configured to configure a sidelink transmission resource used for sidelink transmission to the reception UE based on the coordination information; and
a transmitter (1820) configured to perform the sidelink transmission using the sidelink transmission resource.

10. The transmission UE (1800) of claim 9, wherein the at least one preferred resource set or the at least one non-preferred resource set is configured based on a time resource indicator value, TRIV, regarding time resource allocation and a frequency resource indicator value, FRIV, regarding frequency resource allocation.

11. The transmission UE of claim 9, wherein the coordination information indicating the at least one preferred resource set or the at least one non-preferred resource set is received through 2nd sidelink control information, SCI.

12. The transmission UE of claim 11, wherein the 2nd SCI is configured based on 2nd SCI format 2-C defined for transmission of the coordination information.

## Patentansprüche

1. Verfahren (S1400) zum Durchführen einer Sidelink-Kommunikation durch eine Übertragungsbenutzerausrüstung, UE, unter Verwendung von Koordinierungsinformationen, das Verfahren umfassend:
(S1410) Empfangen, von einer Empfangs-UE, der Koordinationsinformationen, die mindestens einen bevorzugten Ressourcensatz oder mindestens einen nicht bevorzugten Ressourcensatz anzeigen, wobei mindestens eine Funkressource, die in dem bevorzugten Ressourcensatz eingeschlossen ist, konfiguriert ist, um eine reservierte Sidelink-Ressource mit einem RSRP-Messwert, der größer als ein voreingestellter Schwellenwert ist, von einer reservierten Sidelink-Ressource auszuschließen, die von mindestens einer anderen Übertragungs-UE reserviert wird, mindestens eine Funkressource, die in dem nicht bevorzugten Ressourcensatz enthalten ist, konfiguriert ist, um eine reservierte Sidelink-Ressource mit einem RSRP-Messwert, der größer als der voreingestellte Schwellenwert ist, von der reservierten Sidelink-Ressource einzuschließen, die von dem mindestens einer anderen Übertragungs-UE reserviert wurde, wobei die reservierte Sidelink-Ressource in einer Information über eine reservierte Sidelink-Ressource enthalten ist, die von der Empfangs-UE von dem mindestens einer anderen Übertragungs-UE empfangen wird;
(S1420) Konfigurieren einer Sidelink-Übertragungsressource, die für die Sidelink-Übertragung an die Empfangs-UE verwendet wird, basierend auf der Koordinierungsinformation; und
(S1430) Durchführen der Sidelink-Übertragung unter Verwendung der Sidelink-Übertragungsressource.

2. Verfahren (S1400) nach Anspruch 1, wobei der mindestens eine bevorzugte Ressourcensatz oder der mindestens eine nicht bevorzugte Ressourcensatz basierend auf einem Zeitressourcenindikatorwert, TRIV, bezüglich der Zeitressourcenzuweisung und einem Frequenzressourcenindikatorwert, FRIV, bezüglich der Frequenzressourcenzuweisung konfiguriert wird.

3. Verfahren nach Anspruch 1, wobei die Koordinierungsinformation, die den mindestens einen bevorzugten Ressourcensatz oder den mindestens einen nicht bevorzugten Ressourcensatz angibt, durch die zweite Sidelink-Steuerinformation, SCI, empfangen wird.

4. Verfahren nach Anspruch 3, wobei die zweite SCI basierend auf dem zweiten SCI-Format 2-C konfiguriert wird, das getrennt vom bestehenden SCI-Format für die Übertragung der Koordinierungsinformationen definiert ist.

5. Verfahren (S1500) zum Durchführen von Sidelink-Kommunikation durch eine Empfangsbenutzerausrüstung, UE, unter Verwendung von Koordinationsinformationen, das Verfahren umfassend:
(S1510) Konfigurieren der Koordinierungsinformationen, die mindestens einen bevorzugten Ressourcensatz oder mindestens einen nicht-bevorzugten Ressourcensatz für ein Übertragungs-UE anzeigen, wobei mindestens eine Funkressource, die in dem bevorzugten Ressourcensatz eingeschlossen ist, konfiguriert ist, um eine reservierte Sidelink-Ressource mit einem RSRP-Messwert, der größer als ein voreingestellter Schwellenwert ist, von einer reservierten Sidelink-Ressource auszuschließen, die von mindestens einer anderen Übertragungs-UE reserviert wird, mindestens eine Funkressource, die in dem nicht bevorzugten Ressourcensatz enthalten ist, konfiguriert ist, um eine reservierte Sidelink-Ressource mit einem RSRP-Messwert, der größer als der voreingestellte Schwellenwert ist, von der reservierten Sidelink-Ressource einzuschließen, die von dem mindestens einer anderen Übertragungs-UE reserviert wurde, wobei die reservierte Sidelink-Ressource in einer Information über eine reservierte Sidelink-Ressource enthalten ist, die von der Empfangs-UE von dem mindestens einer anderen Übertragungs-UE empfangen wird;
(S1520) Übertragen der Koordinierungsinformationen an die Übertragungs-UE; und
(S1530) Durchführen von Sidelink-Empfang unter Verwendung einer Sidelink-Übertragungsressource, die basierend auf der Koordinierungsinformation konfiguriert wurde.

6. Verfahren (S1500) nach Anspruch 5, wobei der mindestens eine bevorzugte Ressourcensatz oder der mindestens eine nicht bevorzugte Ressourcensatz basierend auf einem Zeitressourcenindikatorwert, TRIV, bezüglich der Zeitressourcenzuweisung und einem Frequenzressourcenindikatorwert, FRIV, bezüglich der Frequenzressourcenzuweisung konfiguriert wird.

7. Verfahren nach Anspruch 5, wobei die Koordinierungsinformation, die den mindestens einen bevorzugten Ressourcensatz oder den mindestens einen nicht bevorzugten Ressourcensatz angibt, durch die zweite Sidelink-Steuerinformation, SCI, übertragen wird.

8. Verfahren nach Anspruch 7, wobei die zweite SCI basierend auf dem zweiten SCI-Format 2-C konfiguriert wird, das für die Übertragung der Koordinierungsinformationen definiert ist.

9. Übertragungsbenutzerausrüstung, UE (1800), die eine Sidelink-Kommunikation unter Verwendung von Koordinationsinformationen durchführt, umfassend:
einen Empfänger (1830), der konfiguriert ist, um von einer Empfangs-UE die Koordinierungsinformationen zu empfangen, die mindestens einen bevorzugten Ressourcensatz oder mindestens einen nicht bevorzugten Ressourcensatz anzeigen, wobei mindestens eine Funkressource, die in dem bevorzugten Ressourcensatz eingeschlossen ist, konfiguriert ist, um eine reservierte Sidelink-Ressource mit einem RSRP-Messwert, der größer als ein voreingestellter Schwellenwert ist, von einer reservierten Sidelink-Ressource auszuschließen, die von mindestens einer anderen Übertragungs-UE reserviert wird, mindestens eine Funkressource, die in dem nicht bevorzugten Ressourcensatz enthalten ist, konfiguriert ist, um eine reservierte Sidelink-Ressource mit einem RSRP-Messwert, der größer als der voreingestellte Schwellenwert ist, von der reservierten Sidelink-Ressource einzuschließen, die von dem mindestens einer anderen Übertragungs-UE reserviert wurde, wobei die reservierte Sidelink-Ressource in einer Information über eine reservierte Sidelink-Ressource enthalten ist, die von der Empfangs-UE von dem mindestens einer anderen Übertragungs-UE empfangen wird;
eine Steuerung (1810), die konfiguriert ist, um eine Sidelink-Übertragungsressource zu konfigurieren, die für die Sidelink-Übertragung an die Empfangs-UE basierend auf der Koordinierungsinformation verwendet wird; und
einen Sender (1820), der konfiguriert ist, um die Sidelink-Übertragung unter Verwendung der Sidelink-Übertragungsressource durchzuführen.

10. Übertragungs-UE (1800) nach Anspruch 9, wobei der mindestens eine bevorzugte Ressourcensatz oder der mindestens eine nicht bevorzugte Ressourcensatz basierend auf einem Zeitressourcenindikatorwert, TRIV, bezüglich der Zeitressourcenzuweisung und einem Frequenzressourcenindikatorwert, FRIV, bezüglich der Frequenzressourcenzuweisung konfiguriert wird.

11. Übertragungs-UE nach Anspruch 9, wobei die Koordinierungsinformation, die den mindestens einen bevorzugten Ressourcensatz oder den mindestens einen nicht bevorzugten Ressourcensatz angibt, durch die zweite Sidelink-Steuerinformation, SCI, empfangen wird.

12. Übertragungs-UE nach Anspruch 11, wobei die zweite SCI basierend auf dem zweiten SCI-Format 2-C konfiguriert wird, das für die Übertragung der Koordinierungsinformationen definiert ist.

## Revendications

1. Procédé (S1400) de réalisation, par un équipement utilisateur, UE, de transmission, de communications de liaison latérale en utilisant une information de coordination, le procédé comprenant :
(S1410) la réception, à partir d'un UE de réception, de l'information de coordination indiquant au moins un ensemble de ressources préférées ou au moins un ensemble de ressources non préférées, au moins une ressource radio comprise dans l'ensemble de ressources préférées étant configurée pour exclure une ressource réservée de liaison latérale ayant une valeur de mesure RSRP supérieure à un seuil prédéfini par rapport à une ressource réservée de liaison latérale réservée par au moins un autre UE de transmission, au moins une ressource radio comprise dans l'ensemble de ressources non préférées étant configurée pour inclure une ressource réservée de liaison latérale ayant la valeur de mesure RSRP supérieure au seuil prédéfini par rapport à la ressource réservée de liaison latérale réservée par l'au moins un autre UE de transmission, la ressource réservée de liaison latérale étant comprise dans une information de ressource réservée de liaison latérale reçue par l'UE de réception à partir de l'au moins un autre UE de transmission ;
(S1420) la configuration d'une ressource de transmission de liaison latérale utilisée pour une transmission de liaison latérale vers l'UE de réception sur la base de l'information de coordination ; et
(S1430) la réalisation de la transmission de liaison latérale en utilisant la ressource de transmission de liaison latérale.

2. Procédé (S1400) selon la revendication 1, dans lequel l'au moins un ensemble de ressources préférées ou l'au moins un ensemble de ressources non préférées est configuré sur la base d'une valeur d'indicateur de ressource temporelle, TRIV, concernant une attribution de ressource temporelle et d'une valeur d'indicateur de ressource fréquentielle, FRIV, concernant une attribution de ressource fréquentielle.

3. Procédé selon la revendication 1, dans lequel l'information de coordination indiquant l'au moins un ensemble de ressources préférées ou l'au moins un ensemble de ressources non préférées est reçue par le biais d'une 2^{e} information de commande de liaison latérale, SCI.

4. Procédé selon la revendication 3, dans lequel la 2^{e} SCI est configurée sur la base d'un 2^{e} format 2-C de SCI défini séparément du format de SCI existant pour une transmission de l'information de coordination.

5. Procédé (S1500) de réalisation, par un équipement utilisateur, UE, de réception, de communications de liaison latérale en utilisant une information de coordination, le procédé comprenant :
(S1510) la configuration de l'information de coordination indiquant au moins un ensemble de ressources préférées ou au moins un ensemble de ressources non préférées pour un UE de transmission, au moins une ressource radio comprise dans l'ensemble de ressources préférées étant configurée pour exclure une ressource réservée de liaison latérale ayant une valeur de mesure RSRP supérieure à un seuil prédéfini par rapport à une ressource réservée de liaison latérale réservée par au moins un autre UE de transmission, au moins une ressource radio comprise dans l'ensemble de ressources non préférées étant configurée pour inclure une ressource réservée de liaison latérale ayant la valeur de mesure RSRP supérieure au seuil prédéfini par rapport à la ressource réservée de liaison latérale réservée par l'au moins un autre UE de transmission, la ressource réservée de liaison latérale étant comprise dans une information de ressource réservée de liaison latérale reçue par l'UE de réception à partir de l'au moins un autre UE de transmission ;
(S1520) la transmission de l'information de coordination à l'UE de transmission ; et
(S1530) la réalisation d'une réception de liaison latérale en utilisant une ressource de transmission de liaison latérale configurée sur la base de l'information de coordination.

6. Procédé (S1500) selon la revendication 5, dans lequel l'au moins un ensemble de ressources préférées ou l'au moins un ensemble de ressources non préférées est configuré sur la base d'une valeur d'indicateur de ressource temporelle, TRIV, concernant une attribution de ressource temporelle et d'une valeur d'indicateur de ressource fréquentielle, FRIV, concernant une attribution de ressource fréquentielle.

7. Procédé selon la revendication 5, dans lequel l'information de coordination indiquant l'au moins un ensemble de ressources préférées ou l'au moins un ensemble de ressources non préférées est transmise par le biais d'une 2^{e} information de commande de liaison latérale, SCI.

8. Procédé selon la revendication 7, dans lequel la 2^{e} SCI est configurée sur la base d'un 2^{e} format 2-C de SCI défini pour une transmission de l'information de coordination.

9. Équipement utilisateur, UE, de transmission (1800) réalisant des communications de liaison latérale en utilisant une information de coordination, comprenant :
un récepteur (1830) configuré pour recevoir, à partir d'un UE de réception, l'information de coordination indiquant au moins un ensemble de ressources préférées ou au moins un ensemble de ressources non préférées, au moins une ressource radio comprise dans l'ensemble de ressources préférées étant configurée pour exclure une ressource réservée de liaison latérale ayant une valeur de mesure RSRP supérieure à un seuil prédéfini par rapport à une ressource réservée de liaison latérale réservée par au moins un autre UE de transmission, au moins une ressource radio comprise dans l'ensemble de ressources non préférées étant configurée pour inclure une ressource réservée de liaison latérale ayant la valeur de mesure RSRP supérieure au seuil prédéfini par rapport à la ressource réservée de liaison latérale réservée par l'au moins un autre UE de transmission, la ressource réservée de liaison latérale étant comprise dans une information de ressource réservée de liaison latérale reçue par l'UE de réception à partir de l'au moins un autre UE de transmission ;
un dispositif de commande (1810) configuré pour configurer une ressource de transmission de liaison latérale utilisée pour une transmission de liaison latérale vers l'UE de réception sur la base de l'information de coordination ; et
un émetteur (1820) configuré pour réaliser la transmission de liaison latérale en utilisant la ressource de transmission de liaison latérale.

10. UE de transmission (1800) selon la revendication 9, dans lequel l'au moins un ensemble de ressources préférées ou l'au moins un ensemble de ressources non préférées est configuré sur la base d'une valeur d'indicateur de ressource temporelle, TRIV, concernant une attribution de ressource temporelle et d'une valeur d'indicateur de ressource fréquentielle, FRIV, concernant une attribution de ressource fréquentielle.

11. UE de transmission selon la revendication 9, dans lequel l'information de coordination indiquant l'au moins un ensemble de ressources préférées ou l'au moins un ensemble de ressources non préférées est reçue par le biais d'une 2^{e} information de commande de liaison latérale, SCI.

12. UE de transmission selon la revendication 11, dans lequel la 2^{e} SCI est configurée sur la base d'un 2^{e} format 2-C de SCI défini pour une transmission de l'information de coordination.
